# EUROPÄISCHE PATENTSCHRIFT

(11) **EP 3 983 887 B1**
(45) Veröffentlichungstag und Bekanntmachung des Hinweises auf die Patenterteilung: **26.10.2022**
(21) Anmeldenummer: 20742213.0
(22) Anmeldetag: 14.07.2020
(51) Int. Cl.: G06F 9/455, G07C 5/00, G07B 13/00

(54) **VERFAHREN ZUM BETREIBEN VON VIRTUELLEN MASCHINEN AUF EINEM RECHNERSYSTEM FÜR EIN KRAFTFAHRZEUG SOWIE EIN DERARTIGES RECHNERSYSTEM**
METHOD FOR OPERATING VIRTUAL MACHINES ON A COMPUTER SYSTEM FOR A MOTOR VEHICLE AND A COMPUTER SYSTEM OF THIS TYPE
PROCÉDÉ POUR FAIRE FONCTIONNER DES MACHINES VIRTUELLES SUR UN SYSTÈME INFORMATIQUE POUR UN VÉHICULE AUTOMOBILE, ET SYSTÈME INFORMATIQUE DE CE TYPE

(30) Priorität: 11.09.2019 DE 102019124343
(43) Veröffentlichungstag der Anmeldung: 20.04.2022
(73) Patentinhaber: Audi AG, 85045 Ingolstadt (DE)
(72) Erfinder: ROTTKAMP, Lukas, 85049 Ingolstadt (DE)
(86) Internationale Anmeldenummer: PCT/EP2020/069827
(87) Internationale Veröffentlichungsnummer: WO 2021/047806

(56) Entgegenhaltungen:
- WO-A1-2015/103374
- CN-A- 109 542 526
- DE-A1-102018 004 286
- US-A1- 2016 224 364

## Beschreibung

Die Erfindung betrifft ein Verfahren zum Betreiben eines Rechnersystems für ein Kraftfahrzeug sowie ein derartiges Rechnersystem für ein Kraftfahrzeug.

Für einen Insassen eines Kraftfahrzeugs, der nicht zu einer Steuerung des Kraftfahrzeugs beiträgt, kann es von Interesse sein, eine Fahrt in dem Kraftfahrzeug zum Arbeiten oder zum Spielen von Computerspielen zu nutzen. Eine derartige Beschäftigungsmöglichkeit bei einer Fahrt mit dem Kraftfahrzeug ist bei einem autonomen Fahrvorgang zudem für alle Insassen des Kraftfahrzeugs interessant. Für eine derartige Nutzung der Zeit im Kraftfahrzeug zum Arbeiten oder Spielen von Computerspielen kann der entsprechende Insasse zum Beispiel eine mobile Recheneinrichtung, wie zum Beispiel einen Laptop, mitbringen. Alternativ dazu kann der Insasse eine eingebaute Fahrzeugrecheneinrichtung des Kraftfahrzeugs benutzen. Dies setzt jedoch voraus, dass der Insasse die für die von ihm gewünschte Tätigkeit erforderlichen Daten sowie Programme in die fest verbaute Fahrzeugrecheneinrichtung überträgt. Ein derartiges Vorgehen ist jedoch gegebenenfalls relativ aufwendig für den Insassen, insbesondere hinsichtlich eines Exports der während der Fahrt mit dem Kraftfahrzeug generierten Daten von der im Kraftfahrzeug verbauten Fahrzeugrecheneinrichtung zu einer fahrzeugexternen Recheneinrichtung, wie beispielsweise der Recheneinrichtung an einem fahrzeugexternen Arbeitsplatz des Insassen.

In der DE 10 2012 205 301 A1 ist eine Rechenarchitektur zur Steuerung einer elektronischen Datenverarbeitung in einem Fahrzeug beschrieben.

Diese Rechenarchitektur umfasst eine Recheneinrichtung, die mindestens zwei virtuelle Maschinen (VM) aufweist, von denen die erste ein erstes Betriebssystem und die zweite ein zweites Betriebssystem umfasst. Mittels einer Virtualisierungsschicht wird ermöglicht, dass das erste und das zweite Betriebssystem auf der Recheneinrichtung parallel betrieben werden können.

Das zweite Betriebssystem weist hierbei eine höhere Sicherheitsanforderung auf als das erste Betriebssystem, sodass das erste Betriebssystem als Betriebssystem mit niedrigem Sicherheitsstandard verwendet wird und das zweite Betriebssystem als zertifiziertes Echtzeitbetriebssystem des Kraftfahrzeugs.

Die DE 10 2013 226 700 A1 zeigt eine Fahrzeugelektronikeinheit, die einen Hypervisor aufweist, der eine erste und eine zweite VM bereitstellt. Der Hypervisor sichert eine Endgerätschnittstelle, die exklusiv der ersten VM zugeordnet ist. An dieser Endgerätschnittstelle kann ein unsicheres Endgerät, wie zum Beispiel ein Universal Serial Bus (USB)-Datenträger, mit der Fahrzeugelektronikeinheit verbunden werden. Über die Endgerätschnittstelle kann also ein Datenaustausch zwischen der ersten VM und dem unsicheren Endgerät ermöglicht werden. Hierbei wird eine Sicherheit der zweiten VM trotz der Verbindung mit dem unsicheren Endgerät nicht gefährdet.

WO 2015/103374 A1 offenbart eine im Kraftfahrzeug verbaute Fahrzeugrecheneinrichtung Zum Betrieb mehreren virtuellen Maschinen, eine dieser virtuellen Maschinen ist für den Empfang von Anwendungen aus dem Internet oder von anderen anderen Geräten ausgelegt.

US 2016/224364 A1 beschreibt die effiziente Übermittlung, das Starten, Stoppen und Speichern von virtuellen Maschinen zwischen zwei Rechensystemen mittels eines mobilen Gerätes.

CN 109 542 526 A offenbart eine bessere Nutzbarkeit einer Fahrzeugrecheneinrichtung, dadurch dass zeitaufwendige Tätigkeiten im Fahrzeug vorab angestoßen werden, ausgelöst durch fahrzeugbezogene Ereignisse, wie zum Beispiel Näherungserkennung oder Türentriegelung.

DE 10 2018 004286 A1 beschreibt die Erzeugung eines Zugriffsberechtigungssignals im Fahrzeug basierend auf der Erfassung durch biometrische Sensoren und Identifikation eines Insassen.

Es ist die Aufgabe der Erfindung, eine Lösung bereitzustellen, mittels derer ein Insasse eines Kraftfahrzeugs komfortabel eine Fahrzeugrecheneinrichtung des Kraftfahrzeugs betreiben kann.

Diese Aufgabe wird durch die Gegenstände der unabhängigen Patentansprüche gelöst. Vorteilhafte Ausgestaltungen mit zweckmäßigen und nicht trivialen Weiterbildungen der Erfindung sind in den abhängigen Ansprüchen, der folgenden Beschreibung und den Figuren angegeben.

Der Erfindung liegt die Erkenntnis zugrunde, dass eine mobile Recheneinrichtung, wie zum Beispiel ein Laptop, üblicherweise Nachteile gegenüber einer fest verbauten Recheneinrichtung aufweist, zum Beispiel da eine derartige mobile Recheneinrichtung oftmals im Vergleich zu einer fest verbauten Recheneinrichtung eine niedrigere Rechenleistung, keine dezidierte Grafickarte und/oder keine einzelnen Laufwerke aufweist. Zudem muss eine derartige mobile Recheneinrichtung stets mitgeführt werden, beispielsweise inklusive eines Netzteils und eines Kabels, wodurch ein Komfortverlust für den Insassen des Kraftfahrzeugs gegeben ist, wenn er mittels einer derartigen mobilen Recheneinrichtung während einer Fahrt des Kraftfahrzeugs im Kraftfahrzeug arbeiten oder ein Computerspiel spielen möchte. Falls der Insasse jedoch eine im Fahrzeug fest verbaute Fahrzeugrecheneinrichtung während der Fahrt des Kraftfahrzeugs nutzt, muss er dort gegebenenfalls die von ihm benötigten Programme installieren, regelmäßig updaten und sich darüber Gedanken machen, wie er die im Kraftfahrzeug generierten Daten beim Verlassen des Kraftfahrzeugs sichert und gegebenenfalls zu einer fahrzeugexternen Recheneinrichtung transportiert. Dies reduziert den Komfort eines Verwendens der im Kraftfahrzeug verbauten Fahrzeugrecheneinrichtung. Es wäre nun möglich, dass der Insasse die von der Fahrzeugrecheneinrichtung generierten Daten beziehungsweise die von ihm im Kraftfahrzeug benötigten Daten in eine Rechnerwolkeninfrastruktur, das heißt in eine sogenannte Cloud, die er von der Fahrzeugrecheneinrichtung aus aufruft, lädt und in einer entsprechenden "Cloud-Software" nutzt. Allerdings ist insbesondere ein datensicherheitsbewusster Insasse des Kraftfahrzeugs nicht daran interessiert, seine Daten und Dokumente für einen Rechnerwolkeninfrastrukturbetreiber bereitzustellen. Es ist daher sinnvoll, bei einem Zugreifen auf die im Kraftfahrzeug fest verbaute Fahrzeugrecheneinrichtung zum Arbeiten oder Computerspielespielen mithilfe einer nicht im Kraftfahrzeug verbauten Datenspeichereinrichtung insassenspezifische bereitzustellen, die von der fest verbauten Fahrzeugrecheneinrichtung geladen und daraufhin mithilfe der Fahrzeugrecheneinrichtung im Kraftfahrzeug verwendet werden können. Es ist also sinnvoll, die Betriebssysteminstallationsdaten des Insassen als sogenannte virtuelle Maschine (VM) zu betreiben. Als VM wird allgemein eine softwaretechnische Kapselung eines Rechnersystems innerhalb eines lauffähigen Rechnersystems bezeichnet. Die VM bildet hierbei die Rechenarchitektur eines real in Hardware existierenden oder eines hypothetischen Rechners nach.

Das erfindungsgemäße Verfahren zum Betreiben eines Rechnersystems für ein Kraftfahrzeug basiert darauf, dass das Rechnersystem eine fest im Kraftfahrzeug verbaute Fahrzeugrecheneinrichtung, eine Erfassungseinrichtung, eine Auswerteeinrichtung sowie eine nicht fest im Kraftfahrzeug verbaute Einrichtung umfasst. Bei der fest im Kraftfahrzeug verbauten Fahrzeugrecheneinrichtung handelt es sich um ein Gerät, das mittels programmierbarer Rechenvorschriften Daten verarbeitet, das heißt um einen Computer. Die Erfassungseinrichtung ist beispielsweise als berührungssensitiver Bildschirm einer Anzeigevorrichtung im Kraftfahrzeug ausgebildet, mittels derer eine Betätigung eines Bedienelements auf dem berührungssensitiven Bildschirm durch eine entsprechende Berührung des berührungssensitiven Bildschirms durch einen Insassen des Kraftfahrzeugs erfasst und als Betätigungssignal des berührungssensitiven Bildschirms bereitgestellt werden kann. Die Auswerteeinheit ist zum Beispiel in die Erfassungseinrichtung integriert und dazu ausgebildet, an der Erfassungseinrichtung erfasste Daten, wie zum Beispiel das Betätigungssignal, auszuwerten. Die nicht fest im Kraftfahrzeug verbaute Datenspeichereinrichtung ist zum Beispiel als Universal Serial Bus (USB)-Datenträger ausgebildet. Die Datenspeichereinrichtung kann folglich von dem Insassen des Kraftfahrzeugs mitgeführt und beispielsweise über eine entsprechende Datenträgerschnittstelle im Kraftfahrzeuginneren mit der Fahrzeugrecheneinrichtung gekoppelt werden. Die Datenspeichereinrichtung ist dazu ausgebildet, über eine Kommunikationsverbindung mit der Fahrzeugrecheneinrichtung Betriebssysteminstallationsdaten an die Fahrzeugrecheneinrichtung zu übermitteln und/oder von dieser zu empfangen. Ist der USB-Datenträger beispielsweise in die Datenträgerschnittstelle eingeführt worden, kann die Kommunikationsverbindung zwischen der Datenspeichereinrichtung und der Fahrzeugrecheneinrichtung aufgebaut sein. Auf dem USB-Datenträger sind die Betriebssysteminstallationsdaten des Insassen gespeichert, mithilfe derer es möglich ist, dass auf der von der Fahrzeugrecheneinrichtung bereitgestellten Hardware die auf dem USB-Datenträger gespeicherten Betriebssysteminstallationsdaten als VM betrieben werden können. Dies basiert auf der Möglichkeit der Übertragung der Betriebssysteminstallationsdaten von der Datenspeichereinrichtung an die Fahrzeugrecheneinrichtung sowie einer entsprechenden Übertragung von Daten von der Fahrzeugrecheneinrichtung auf die Datenspeichereinrichtung mittels der Kommunikationsverbindung.

Das erfindungsgemäße Verfahren umfasst folgende Schritte: Zunächst erfolgt ein Ermitteln eines kraftfahrzeugbezogenen Aktivierungsereignisses für ein Betreiben von auf der Datenspeichereinrichtung gespeicherten Betriebssysteminstallationsdaten als VM auf der Fahrzeugrecheneinrichtung. Das Ermitteln erfolgt anhand von mittels der Erfassungseinrichtung erfassten Aktivierungsindikatordaten mittels der Auswerteeinheit. Die Auswerteeinheit führt somit das Ermitteln des kraftfahrzeugbezogenen Aktivierungsereignisses durch. Das kraftfahrzeugbezogene Aktivierungsereignis kann zum Beispiel ein Betätigen eines als Aktivierungselement dienenden Bedienelements zum Starten des Betreibens der VM durch den Insassen des Kraftfahrzeugs auf dem berührungssensitiven Bildschirm im Kraftfahrzeug sein. Hierfür wird zum Beispiel ein entsprechendes Symbol auf dem berührungssensitiven Bildschirm im Kraftfahrzeug angezeigt, dass der Insasse mit einem Finger seiner Hand berührt und dadurch betätigt. Das Betätigen des Aktivierungselements wird somit als kraftfahrzeugbezogenen Aktivierungsereignis betrachtet. Die erfassten Aktivierungsindikatordaten sind in diesem Beispiel durch das Berühren des Aktivierungselements auf dem berührungssensitiven Bildschirm erzeugte Signale. Letztendlich wird hierbei der Moment festgestellt, in dem ein Indikator dafür vorliegt, dass eine Aktivierung des Betreibens der auf der Datenspeichereinrichtung gespeicherten Daten als VM auf der Fahrzeugrecheneinrichtung gewünscht ist.

Sobald das kraftfahrzeugbezogene Aktivierungsereignis ermittelt wurde, werden mittels der Fahrzeugrecheneinrichtung die auf der Datenspeichereinrichtung gespeicherten Betriebssysteminstallationsdaten empfangen und das Betreiben der VM wird gestartet. Nachdem also zum Beispiel festgestellt wurde, dass das Aktivierungselement zum Starten des Betreibens der VM betätigt wurde, werden Schritte eingeleitet, um die auf der Datenspeichereinrichtung gespeicherten Betriebssysteminstallationsdaten als VM mittels der Fahrzeugrecheneinrichtung zu betreiben. Hierfür werden zunächst entsprechende Daten von der Datenspeichereinrichtung über die Kommunikationsverbindung an die Fahrzeugrecheneinrichtung übermittelt, das heißt von der Fahrzeugrecheneinrichtung empfangen und daraufhin das Betreiben der VM aktiviert. Ab diesem Zeitpunkt kann nun der Insasse des Kraftfahrzeugs mithilfe der Hardware der im Kraftfahrzeug verbauten Fahrzeugrecheneinrichtung mit der auf den Betriebssysteminstallationsdaten basierenden VM arbeiten oder zum Beispiel ein Computerspiel spielen. Hierfür wurde keine Betriebssysteminstallation auf der im Kraftfahrzeug verbauten Fahrzeugrecheneinrichtung durchgeführt, sondern es werden lediglich die Betriebssysteminstallationsdaten als VM auf der Fahrzeugrecheneinrichtung betrieben. Der Insasse des Kraftfahrzeugs stellt somit mithilfe der Datenspeichereinrichtung seine eigene Betriebssysteminstallation bereit. Zur technischen Realisierung wird hierbei beispielsweise auf Virtualisierungstechnologie, wie sie bereits handelsüblich im Zusammenhang mit dem Betreiben von VM bereitgestellt wird, zurückgegriffen, sodass die auf der Datenspeichereinrichtung gespeicherten Betriebssysteminstallationsdaten als VM mittels der Fahrzeugrecheneinrichtung betreibbar sind.

In einem weiteren Schritt des Verfahrens erfolgt ein Ermitteln eines kraftfahrzeugbezogenen Deaktivierungsereignisses für das Betreiben der VM auf der Fahrzeugrecheneinrichtung. Dies erfolgt anhand von mittels der Erfassungseinrichtung erfassten Deaktivierungsindikationsdaten, wobei das Ermitteln des Deaktivierungsereignisses mittels der Auswerteeinheit erfolgt. Als kraftfahrzeugbezogenes Deaktivierungsereignis kann zum Beispiel eine Betätigung eines Deaktivierungselements zum Beenden des Betreibens der VM auf dem berührungssensitiven Bildschirm der Anzeigeeinrichtung des Kraftfahrzeugs festgestellt werden. Als Deaktivierungsindikationsdaten werden die entsprechenden Betätigungssignale des Deaktivierungselements von der Auswerteeinheit ausgewertet, sodass ein entsprechendes Signal, das das kraftfahrzeugbezogene Deaktivierungsereignis beschreibt, der Fahrzeugrecheneinrichtung bereitgestellt wird. Sobald das Deaktivierungsereignis ermittelt wurde, erfolgt ein Übertragen von einen aktuellen Betriebssystemzustand der VM beschreibenden Betriebssysteminstallationsdaten an die Datenspeichereinrichtung und eine Speichervorrichtung der Fahrzeugrecheneinrichtung mittels der Fahrzeugrecheneinrichtung. Sobald also festgestellt wurde, dass zum Beispiel der Insasse des Kraftfahrzeugs kein weiteres Betreiben der VM auf der Fahrzeugrecheneinrichtung wünscht, da er beispielsweise durch Betätigung des Deaktivierungselements ein Herunterfahren der aktuell von ihm verwendeten Betriebssysteminstallation wünscht, werden der aktuelle Zustand der bisher aktiven Betriebssysteminstallation in Form von entsprechenden Betriebssysteminstallationsdaten gespeichert, indem die Betriebssysteminstallationsdaten über die Kommunikationsverbindung von der Fahrzeugrecheneinrichtung an die Datenspeichereinrichtung und/oder die Speichervorrichtung übermittelt werden. Es wird also nach Ermitteln des Deaktivierungsereignisses der aktuelle Zustand der VM zum Beispiel auf der Datenspeichereinrichtung gespeichert, sodass der Insasse zu einem späteren Zeitpunkt, zum Beispiel mittels einer fahrzeugexternen Recheneinrichtung in einem Büro oder zu Hause, auf dem aktuellen Zustand der VM aufbauend weiter arbeiten oder ein Computerspiel spielen kann. Zum Realisieren des Übertragend der den aktuellen Zustand der VM beschreibenden Betriebssystem installationsdaten kann beispielsweise auf eine sogenannt Snapshot-Technologie zurückgegriffen werden, mittels derer ein virtuelles Abbild des verwendeten Betriebssystems aufgenommen und bereitgestellt werden kann. Hierdurch ist es außerdem nicht nötig, dass das auf der im Kraftfahrzeug verbauten Fahrzeugrecheneinrichtung betriebene Betriebssystem heruntergefahren wird, damit es zu einem späteren Zeitpunkt bei einem Arbeitsplatzwechsel wiederverwendet werden kann, sondern es ist sogar ein Verwenden beziehungsweise Betreiben der VM auf der fahrzeugexternen Recheneinrichtung bei weiterhin laufendem Betrieb auf der Fahrzeugrecheneinrichtung möglich. Letztendlich wird durch das Übertragen der den aktuellen Betriebssystemzustand der VM beschreibenden Betriebssysteminstallationsdaten eine Synchronisierungsmöglichkeit zwischen der VM im Kraftfahrzeug und einem fahrzeugextern betriebenen Betriebssystem bereitgestellt.

Bei einem Speichern der den aktuellen Betriebssystemzustand der VM beschreibenden Betriebssystem installationsdaten auf der Speichervorrichtung der Fahrzeugrecheneinrichtung kann, falls der Insasse erst bei einer zukünftigen Fahrt mit dem Kraftfahrzeug weiter die VM nutzen möchte, da er zum Beispiel erst dann weiterarbeiten möchte, eine womöglich zeitintensive Übertragung der entsprechenden Betriebssysteminstallationsdaten zur Datenspeichereinrichtung vermieden werden, indem im Kraftfahrzeug selbst, und zwar in der Speichervorrichtung der Fahrzeugrecheneinrichtung, die für ein Weiterarbeiten mit der VM benötigten Daten abgespeichert werden. Denn mitunter ist es der Fall, dass sich in der Zwischenzeit zwischen Deaktivierungsereignis und erneutem Aktivieren der Betriebssystem installationsdaten zum Weiterarbeiten oder Weiterspielen im Kraftfahrzeug gar keine Daten ändern und daher keine geänderten Betriebssysteminstallationsdaten von der Datenspeichereinrichtung zur Fahrzeugrecheneinrichtung übertragen werden müssen. Dies ist beispielsweise dann der Fall, wenn ein Insasse ein Fahrzeug abends verlässt und am nächsten Morgen wieder in dieses Fahrzeug einsteigt und dort ein neues Aktivierungsereignis auslöst ohne in der Zwischenzeit anderweitig mit der VM gearbeitet zu haben. Für diesen Fall wird eine Speicherung der Betriebssysteminstallationsdaten des Insassen im Kraftfahrzeug ermöglicht, und zwar eine Speicherung auf der Speichervorrichtung der Fahrzeugrecheneinrichtung. Nach dem Aussteigen des Insassen als Deaktivierungsereignis werden die den aktuellen Betriebssystemzustand der VM beschreibenden Betriebssysteminstallationsdaten daher zumindest temporär in der Speichervorrichtung gespeichert. Es ist hierbei vorgesehen, dass sich die dort gespeicherten Daten automatisch löschen, wenn für eine vorgegebene Zeitdauer von beispielsweise einem Tag, zwei Tagen, drei Tagen oder einer Woche nicht auf die Daten zugegriffen wurde und/oder wenn Speicherplatz in der Speichervorrichtung einen vorgegebenen Minimalspeicherplatzwert unterschreitet, das heißt knapp wird. Die Speichervorrichtung kann also als ein sogenannter Cache vorgesehen sein. Bei einem nächsten Aktivierungsereignis wird daraufhin zunächst prüft, ob überhaupt neue Betriebssystem installationsdaten von der Datenspeichereinrichtung übertragen werden müssen, oder ob alle oder zumindest ein Teil der benötigten Betriebssysteminstallationsdaten aus der Speichervorrichtung geladen werden können. Hierdurch kann eine Aktivierung- und/oder Deaktivierungszeit der VM reduziert werden, verglichen mit dem Laden und Speichern der Betriebssysteminstallationsdaten auf der Datenspeichereinrichtung. Allerdings ist ein Weiterarbeiten mit dem aktuellen Zustand der VM außerhalb des Kraftfahrzeugs bei einem reinen Speichern der Betriebssysteminstallationsdaten in der Speichervorrichtung nicht möglich.

Es kann also eine Synchronisation der Betriebssysteminstallationsdaten mit der Datenspeichereinrichtung und/oder der Speichervorrichtung durchgeführt werden. Letztendlich findet die Synchronisation bevorzugt zwischen der Fahrzeugrecheneinrichtung und der Datenspeichereinrichtung statt, beispielsweise als sogenannte Cloudsynchronisation. Es ist jedoch alternativ oder zusätzlich dazu möglich, eine intelligente Synchronisation von der Fahrzeugrecheneinrichtung mit den geladenen Betriebssysteminstallationsdaten zur Speichervorrichtung im Kraftfahrzeug vorzusehen. Dann kann die Speichervorrichtung auch nach einer Beendigung der Nutzung der VM und einem Ausschalten des Kraftfahrzeugs weiterhin die Betriebssysteminstallationsdaten nach Art eines Cache für die nächste Aktivierung bereithalten.

Da die Betriebssysteminstallationsdaten an sich in der Regel so groß sind, dass ihre vollständige Übertragung an die Datenspeichereinrichtung und/oder die Speichervorrichtung mehrere Minuten dauert, werden nicht immer alle Betriebssysteminstallationsdaten übertragen sondern nur die den aktuellen Betriebssystemzustand der VM beschreibenden Betriebssystem installationsdaten. Es ist nämlich vorteilhaft, wenn nicht immer alle Betriebssysteminstallationsdaten neu übertragen werde, sondern nur Teile der Daten, die sich geändert haben. Derartige Daten werden hier als die den aktuellen Betriebssystemzustand der VM beschreibenden Betriebssysteminstallationsdaten bezeichnet. Alternativ dazu ist es möglich, dass die vollständigen Betriebssysteminstallationsdaten übertragen werden.

Ein Vorteil des erfindungsgemäßen Verfahrens ist, dass ein Insasse des Kraftfahrzeugs seine eigene Betriebssysteminstallation nutzen kann, wie er dies auch auf einer mitgebrachten mobilen Recheneinrichtung tun könnte, dafür aber gleichzeitig alle Vorteile einer fest im Kraftfahrzeug verbauten Recheneinrichtung im Vergleich zu einer mobilen Recheneinrichtung hat. Dies bewirkt ein komfortables Betreiben und Nutzen der Fahrzeugrecheneinrichtung für den Insassen. Zum einen muss die mobile Recheneinrichtung nicht mitgeführt werden, sondern es reicht aus, beispielsweise die Datenspeichereinrichtung in Form eines USB-Datenträgers mit sich zu führen. Alternativ dazu ist beispielsweise als Datenspeichereinrichtung eine Rechnerwolkeninfrastruktur möglich, sodass beispielsweise überhaupt kein starres Gerät von dem Insassen in das Kraftfahrzeug mitgenommen werden muss, um das beschriebene Verfahren durchführen zu können. Hierdurch kann letztendlich, insbesondere durch das beschriebene Übertragen der den aktuellen Betriebssystemzustand der VM beschreibenden Betriebssystem installationsdaten an die Datenspeichereinrichtung, ein drahtloses mobiles Arbeiten oder Computerspielespielen während eines Aufenthalts in einem Kraftfahrzeug ermöglicht werden. Der Insasse kann sich hierfür einfach in das Kraftfahrzeug, zum Beispiel ein Taxi, setzen und dort mithilfe der Kommunikationsverbindung zur gewählten Datenspeichereinrichtung die eigene Betriebssysteminstallation sofort lauffähig starten, ohne dass zuvor die mobile Recheneinrichtung transportiert, aufgeklappt, angeschlossen und/oder hochgefahren werden muss. Hierdurch wird also ein komfortables und mit einem geringen Aufwand für den Insassen verbundenes Betreiben eines eigenen Betriebssystems auf einer im Kraftfahrzeug fest verbauten Fahrzeugrecheneinrichtung möglich.

Zu der Erfindung gehören auch Ausgestaltungsformen, durch die sich zusätzliche Vorteile ergeben.

In einer vorteilhaften Ausgestaltungsform ist es vorgesehen, dass nach dem Ermitteln des Deaktivierungsereignisses und dem Übertragen der den aktuellen Betriebssystemzustand der VM beschreibenden Betriebssysteminstallationsdaten das Betreiben der VM beendet wird. Immer dann, wenn die beschriebene Synchronisation zwischen den im Kraftfahrzeug verwendeten Betriebssysteminstallationsdaten und den auf der Datenspeichereinrichtung hinterlegen Betriebssysteminstallationsdaten erfolgt, das heißt, immer sobald das Deaktivierungsereignis ermittelt wurde, kann somit auch die vollständige Deaktivierung des Betreibens der VM erfolgen, indem das Betreiben der VM mittels der Fahrzeugrecheneinrichtung beendet wird. Hierdurch wird beispielsweise ein Energieverbrauch im Kraftfahrzeug reduziert, da das Betreiben der VM stets nur dann erfolgt, wenn dies tatsächlich von dem Insassen des Kraftfahrzeugs gewünscht ist. Das Deaktivierungsereignis stellt hierbei den Wunsch des Insassen zum Beenden des Betreibens der VM dar, woraufhin das Betreiben der Betriebssysteminstallationsdaten mittels der Fahrzeugrecheneinrichtung vollständig heruntergefahren wird. Hierdurch wird außerdem sichergestellt, dass beispielsweise kein Verwenden der VM durch Dritte, die beispielsweise in das Kraftfahrzeug einsteigen und dort trotz Deaktivierungsereignis von Seiten des Insassen her weiter auf dessen personenspezifische Benutzerinstallationsdaten zugreifen können, möglich ist. Hierdurch wird letztendlich ein besonders komfortables da automatisch nach dem Deaktivierungsereignis erfolgendes Beenden des beschriebenen Betreibens der VM mittels der Fahrzeugrecheneinrichtung bereitgestellt.

Gemäß einer weiteren Ausgestaltungsform ist es vorgesehen, dass auf der Fahrzeugrecheneinrichtung eine Virtualisierungssoftware bereitgestellt ist, mittels derer die empfangen Betriebssysteminstallationsdaten als VM betrieben werden. Diese Virtualisierungssoftware ist also dazu ausgebildet, ein Softwareobjekt durch ein ähnliches Objekt vom selben Typ mittels eines Abstraktionslayer nachzubilden. Hierdurch lässt sich generell ein virtuelles Geräte oder ein virtueller Dienst, wie hier das virtuelle Betriebssystem, basierend auf den bereitgestellten Betriebssysteminstallationsdaten erzeugen. Hierdurch wird das Betreiben des mithilfe der Betriebssysteminstallationsdaten auf der Datenspeichereinrichtung bereitgestellten Betriebssystems als VM innerhalb eines Betriebssystems der im Kraftfahrzeug verbauten Fahrzeugrecheneinrichtung ermöglicht. Die Virtualisierungssoftware ist hierbei auf der Fahrzeugrecheneinrichtung hinterlegt, sodass es bevorzugt vorgesehen sein kann, dass die Betriebssysteminstallationsdaten verschlüsselt auf der Datenspeichereinrichtung hinterlegt sind und nur mittels einer entsprechenden Freigabe durch den Insassen oder einer im Betriebssystem der Fahrzeugrecheneinrichtung hinterlegen Entschlüsselungsmöglichkeit von der Fahrzeugrecheneinrichtung entschlüsselt und auf dieser nutzbar gemacht werden können. Dadurch wird sichergestellt, dass nur die tatsächlich von einem Insassen des Kraftfahrzeugs gewünschten Betriebssysteminstallationsdaten von der Fahrzeugrecheneinrichtung derart verarbeitet werden, dass diese sie als VM betreibt. In diesem Zusammenhang ist es zudem möglich, dass die Betriebssysteminstallationsdaten, die als VM betrieben werden, entweder als ein zusammenhängendes Datenpaket oder als mehrere einzelne Datenpakete, die jeweils beispielsweise verschlüsselt und separat voneinander ausgesendet werden, von der Datenspeichereinrichtung an die Fahrzeugrecheneinrichtung übermittelt und mithilfe der Virtualisierungssoftware letztendlich als VM betrieben werden. Letztendlich ermöglicht die Virtualisierungssoftware ein unkompliziertes, direktes Betreiben der VM auf der Fahrzeugrecheneinrichtung.

Eine besonders vorteilhafte Ausgestaltungsform der Erfindung sieht vor, dass auf der Fahrzeugrecheneinrichtung eine Datenabgleichsoftware bereitgestellt ist, mittels derer die den aktuellen Betriebssystemzustand der VM beschreibenden Betriebssysteminstallationsdaten zum Übertragen an die Datenspeichereinrichtung und/oder die Speichervorrichtung der Fahrzeugrecheneinrichtung erzeugt werden. Mithilfe der Datenabgleichsoftware erfolgt somit der oben beschriebene "Snapshot" des Betriebssystemzustands der VM, um diesen auf der Datenspeichereinrichtung zu hinterlegen. Hierbei kann auf typische und gängige Verfahren hierfür zurückgegriffen werden, die mithilfe der Datenabgleichsoftware der Fahrzeugrecheneinrichtung bereitgestellt und von dieser verwendet werden können. Dies ermöglicht, dass das Betriebssystem, das als VM auf der Fahrzeugrecheneinrichtung verwendet wird, im jeweilig aktuellen Betriebssystemendzustand gesichert und für eine anschließende Verwendung auf derselben und/oder einer anderen Recheneinrichtung bereitgestellt wird. Hierdurch wird ein komfortabler Wechsel zwischen einem Betreiben der VM mittels der im Kraftfahrzeug verbauten Fahrzeugrecheneinrichtung und einer beliebigen weiteren Recheneinrichtung, die der Insasse des Kraftfahrzeugs verwenden möchte, möglich.

Eine weitere Ausgestaltungsform sieht vor, dass während des Betreibens der VM zu zumindest einem vorgegebenen Datenabgleichzeitpunkt die den aktuellen Betriebszustand der VM beschreibenden Betriebssysteminstallationsdaten übermittelt werden. Der zumindest eine vorgegebene Datenabgleichzeitpunkt kann beispielsweise anhand eines vorgegebenen Zeitintervalls seit dem Starten des Betreibens der VM vorgegeben sein. Es kann beispielsweise vorgesehen sein, dass alle zehn Minuten ab Start des Betreibens der VM ein derartiger Datenabgleichzeitpunkt erreicht ist und somit alle zehn Minuten die beschriebene Sicherungskopie des aktuellen Betriebszustands der VM in Form der den aktuellen Betriebssystemzustand der VM beschreibenden Betriebssysteminstallationsdaten an die Datenspeichereinrichtung übermittelt und somit von dieser gesichert werden kann. Auch während des Betreibens der VM auf der Fahrzeugrecheneinrichtung kann somit immer wieder der Datenabgleich, beispielsweise mittels Anwenden der Datenabgleichsoftware, erfolgen. Hierdurch ist sogar ohne ermitteltes Deaktivierungsereignis ein Zugreifen auf einen aktuellen Betriebssystemzustand der VM möglich. Dies unterstützt den Insassen bei dem beschriebenen möglichen nahtlosen Übergang von dem Betreiben der VM auf der im Kraftfahrzeug verbauten Fahrzeugrecheneinrichtung zu einem Betreiben des aktuellen Betriebssystems auf einer anderen Recheneinrichtung seiner Wahl. Zur vorteilhaften zusätzlichen Absicherung der Betriebssystemzustandsdaten können also Zwischensynchronisationen des jeweiligen aktuellen Betriebszustands der VM durchgeführt und auf der Datenspeichereinrichtung hinterlegt werden.

Des Weiteren ist es in einer Ausgestaltungsform des erfindungsgemäßen Verfahrens vorgesehen, dass die Erfassungseinrichtung als Aktivierungsindikatordaten Daten erfasst, die zumindest eine der folgenden Situationen beschreiben: eine Betätigung eines Aktivierungselements zum Starten des Betreibens der VM, ein Koppeln der Datenspeichereinrichtung mit den gespeicherten Betriebssysteminstallationsdaten mit einer Datenspeichereinrichtungsschnittstelle des Kraftfahrzeugs, ein erfolgreicher Anmeldevorgang bei einem vorgegebenen Benutzerkonto, eine Entriegelung einer Türschlosseinrichtung des Kraftfahrzeugs, ein Öffnen einer Fahrzeugtür des Kraftfahrzeugs bei Nichtbetreiben der VM und/oder eine Belegung eines Fahrzeugsitzes im Kraftfahrzeug.

Als Aktivierungsereignis kann somit beispielsweise, wie oben bereits beschrieben, die Betätigung des Aktivierungselements zum Starten des Betreibens der VM auf der Anzeigeeinrichtung im Kraftfahrzeug, die als berührungssensitiver Bildschirm ausgebildet sein kann, festgestellt werden. Das Aktivierungselement kann alternativ oder zusätzlich zu einem auf dem berührungssensitiven Bildschirm angezeigten Element als bedienbare Taste, Drehdrückschalter und/oder bedienbarer Knopf im Kraftfahrzeug vorgesehen sein, sodass eine Betätigung eines derartigen Betätigungselements das Starten des Betreibens der VM letztendlich in Form von entsprechenden Aktivierungsindikatordaten bewirken kann. Alternativ oder zusätzlich dazu kann eine Datenspeichereinrichtungsschnittstelle des Kraftfahrzeugs einen Sensor als Erfassungseinrichtung umfassen, der ein Einführen oder Einbinden der beispielsweise als USB-Datenträger ausgebildeten Datenspeichereinrichtung feststellt und anhand eines derartigen festgestellten Kopplungssignal das Koppeln der Datenspeichereinrichtung mit der Datenspeichereinrichtungsschnittstelle erfasst. Außerdem wird überprüft, ob auf der eingeführten oder eingebundenen Datenspeichereinrichtung gespeicherte Betriebssysteminstallationsdaten vorliegen. Ist dies der Fall wird das Koppeln der Datenspeichereinrichtung mit den gespeicherten Betriebssysteminstallationsdaten mit der Datenspeichereinrichtungsschnittstelle des Kraftfahrzeugs als Aktivierungsereignis angesehen. Alternativ oder zusätzlich dazu kann mittels einer Komponente der Fahrzeugrecheneinrichtung als Erfassungseinrichtung überprüft werden, ob ein Anmeldevorgang eines Insassen des Kraftfahrzeugs bei einem vorgegebenen personenbezogenen Benutzerkonto erfolgreich war und ein derartiger erfolgreicher Anmeldevorgang als Aktivierungsereignis gewertet werden. Das Benutzerkonto kann im Kraftfahrzeug, auf einer Rechnerwolkeninfrastruktur und/oder auf einer externen Servereinrichtung, beispielsweise eines Fahrzeugherstellers, hinterlegt sein und beispielsweise mittels einer Passwortanfrage abgesichert sein. Nur bei erfolgreicher Passwortüberprüfung wird der Anmeldevorgang als erfolgreich bewertet.

Alternativ oder zusätzlich dazu kann es sich bei der Erfassungseinrichtung um eine Sensoreinrichtung des Kraftfahrzeugs handeln, beispielsweise um einen Sensor, der das Entriegeln einer Verschließeinrichtung der Fahrzeugtüren des Kraftfahrzeugs detektiert und/oder ein Öffnen oder Schließen der jeweiligen Fahrzeugtür selbst feststellt. Befindet sich beispielsweise aktuell die VM nicht im Betrieb, kann ein Öffnen der Fahrzeugtür als Indikator dafür dienen, dass der Insasse in das Kraftfahrzeug einsteigt und folglich womöglich alsbald ein Betreiben der VM wünscht. Ein Zusteigen des Insassen kann alternativ oder zusätzlich dazu bereits am Entriegeln der Türschlosseinrichtung des Kraftfahrzeugs erkannt werden, sodass dies bereits als kraftfahrzeugbezogenes Aktivierungsereignisse angesehen werden kann, dass darauf hindeuten, dass der Insasse ein zeitlich naheliegendes Betreiben der VM auf der Fahrzeugrecheneinrichtung wünscht. Alternativ oder zusätzlich dazu kann mittels einer Sensoreinrichtung eines Fahrzeugsitzes, wie zum Beispiel eines im Fahrzeugsitz verbauten Wiegesensors, dessen Sitzbelegung durch den Insassen erkannt und als entsprechendes Aktivierungsereignis angesehen werden. Eine baldige oder bereits detektierte Anwesenheit eines Insassen im Kraftfahrzeug kann somit bereits dahingehend gewertet werden, dass das Starten der VM eingeleitet werden sollte. Dies bewirkt in vorteilhafter Weise, dass der Insasse während seines Aufenthalts im Kraftfahrzeug zu jeder Zeit zeitnah und mit geringer Wartezeit auf die bereits gestartete VM zugreifen kann.

Voraussetzung hierfür ist jedoch stets, dass die Kommunikationsverbindung zwischen der Datenspeichereinrichtung und der Fahrzeugrecheneinrichtung gegeben ist. Wird beispielsweise ein Entriegeln einer Türschlosseinrichtung des Kraftfahrzeugs detektiert, jedoch keine Kommunikationsverbindung zwischen der Datenspeichereinrichtung und der Fahrzeugrecheneinrichtung festgestellt, da beispielsweise der USB-Datenträger nicht in der entsprechenden Datenträgerschnittstelle der Fahrzeugrecheneinrichtung positioniert ist, kommt es nicht zu einem Ermitteln des Aktivierungsereignisses, da die entsprechenden Betriebssysteminstallationsdaten nicht von der Datenspeichereinrichtung bereitgestellt sind. Relevant ist hierbei außerdem, dass die Aktivierungsindikatordaten stets ein kraftfahrzeugbezogenes Aktivierungsereignis beschreiben, wie es durch die Betätigung des Aktivierungselements der Anzeigeeinrichtung im Kraftfahrzeug aber auch durch die verschiedenen Situationen betreffend das Einsteigen des Insassen im Kraftfahrzeug gegeben ist. All diese Aktivierungsindikatordaten beschreiben somit Situationen, die einen eindeutigen Bezug zum Kraftfahrzeug aufweisen, mittels dessen Fahrzeugrecheneinrichtung die Betriebssysteminstallationsdaten des Insassen als VM betrieben werden sollen. Hierdurch wird insgesamt ein automatisches Aktivieren der VM, das heißt ein automatisches Laden der auf der Datenspeichereinrichtung gespeicherten Betriebssystem installationsdaten und anschließendes Starten des Betreibens der VM mittels der Fahrzeugrecheneinrichtung, möglich. Hierbei kann eine Vielzahl von möglichen Indikatoren vorgesehen sein, sodass mit einer hohen Wahrscheinlichkeit davon ausgegangen werden kann, dass bei Erfassen der Aktivierungsindikatordaten und dem daraufhin ermittelten kraftfahrzeugbezogenen Aktivierungsereignis tatsächlich mit einem Wunsch des Insassen zum Betreiben der VM mittels der Fahrzeugrecheneinrichtung gerechnet werden kann. Hierdurch wird ein besonders komfortables Betreiben der Betriebssystem installationsdaten als VM auf der Fahrzeugrecheneinrichtung ermöglicht. Die vom Insassen gewünschten Aktivierungsereignisse können hierbei vom Insassen im Kraftfahrzeug angegeben und somit benutzerspezifisch vorgegeben sein. Eine Berücksichtigung von personenspezifischen Vorlieben hinsichtlich des erfassten Aktivierungsereignisses ist somit möglich, wodurch erreicht wird, dass das Betreiben der VM nur dann initiiert wird, wenn dies tatsächlich vom Insassen aktuell oder zeitnah gewünscht wird. Hierbei kann beispielsweise auf ein hinterlegtes früheres Verhalten des Insassen im Kraftfahrzeug zurückgegriffen werden, anhand dessen bekannt ist, dass der Insasse stets bei Fahrten mit dem Kraftfahrzeug am Vormittag unmittelbar nach seinem Einstieg in das Kraftfahrzeug beginnt unter Verwendung der VM zu arbeiten. Es wird also trotz automatischem Start ein energiesparsames Betreiben der VM im Kraftfahrzeug möglich, da ein Starten der VM ohne Indikatoren für einen Aktivierungswunsch des Insassen vermieden wird.

Außerdem sieht eine Ausgestaltungsform der Erfindung vor, dass die Erfassungseinrichtung als Deaktivierungsindikatordaten Daten erfasst, die zumindest eine von folgenden Situationen beschreiben: eine Betätigung eines Deaktivierungselements zum Beenden des Betreibens der VM, ein erfolgreicher Abmeldevorgang bei einem vorgegebenen Benutzerkonto, eine Nichtbetätigung eines Bedienelements zum Bedienen der betriebenen VM für eine vorgegebene Mindestzeitdauer, ein Verriegeln einer Türschlosseinrichtung des Kraftfahrzeugs, ein Öffnen einer Fahrzeugtür des Kraftfahrzeugs bei betriebener VM und/oder einer Nichtbelegung eines Fahrzeugsitzes im Kraftfahrzeug bei betriebener VM. Analog zur Betätigung des Aktivierungselements, zum Beispiel auf dem berührungssensitiven Bildschirm, kann mithilfe des berührungssensitiven Bildschirms ein vorgegebenes Deaktivierungselement bereitgestellt werden, wobei bei Betätigung des Deaktivierungselements ein Beendigungswunsch des Betreibens der VM ausgedrückt wird. Alternativ oder zusätzlich dazu kann mittels einer Komponente der Fahrzeugrecheneinrichtung als Erfassungseinrichtung überprüft werden, ob ein Abmeldevorgang des Insassen des Kraftfahrzeugs bei dem vorgegebenen personenbezogenen Benutzerkonto erfolgreich war und ein derartiger erfolgreicher Abmeldevorgang als Aktivierungsereignis gewertet werden. Das Benutzerkonto kann im Kraftfahrzeug, auf der Rechnerwolkeninfrastruktur und/oder auf der externen Servereinrichtung, beispielsweise des Fahrzeugherstellers, hinterlegt sein. Demgegenüber kann es jedoch zudem oder alternativ vorgesehen sein, dass immer, wenn eine vorgegebene Mindestzeitdauer der Nichtbetätigung der VM festgestellt wird, dies als Deaktivierungsereignis angesehen wird und daraufhin zumindest das Übertragen der den aktuellen Betriebssystemzustand der VM beschreibenden Betriebssystem installationsdaten an die Datenspeichereinrichtung erfolgt. Diese Mindestzeitdauer kann beispielsweise zehn Minuten umfassen, sodass bei einer Nichtbetätigung jeglicher Art der VM dieses Verhalten des Insassen als Deaktivierungswunsch gewertet und daraufhin die beschriebene Übertragung der Betriebssysteminstallationsdaten sowie gegebenenfalls das Beenden der VM initiiert werden. Dieses Vorgehen eignet sich beispielsweise für ein energiesparsames Betreiben der Betriebsinstallationsdaten als VM auf der Fahrzeugrecheneinrichtung, da auf eine inaktive Phase des Benutzers zeitnah reagiert wird.

Analog zu den oben beschriebenen Situationen, in denen das kraftfahrzeugbezogene Aktivierungsereignis letztendlich der Entriegelung der Türschlosseinrichtung, dem Öffnen der Fahrzeugtür und/oder der Belegung des Fahrzeugsitzes entnommen werden kann, kann bei einem Verriegeln einer Türschlosseinrichtung des Kraftfahrzeugs, zum Beispiel bei Verlassen des Kraftfahrzeugs durch den Insassen, beim Öffnen der Fahrzeugtür bei aktuell betriebener VM und/oder bei einer bei aktuell betriebener VM erkannten Nichtbelegung des Fahrzeugsitzes im Kraftfahrzeug entsprechend auf eine gewünschte Deaktivierung der VM geschlossen werden. Diese Situationen können daher jeweils als Indikator für das kraftfahrzeugbezogene Deaktivierungsereignis interpretiert werden. Anhand einer oder mehrerer dieser Situationen lässt sich also auf ein Verlassen des Kraftfahrzeugs durch den Insassen schließen, was als auslösendes Ereignis für eine Deaktivierung des Betreibens der VM ausgewertet wird. Da in diesen Situationen stets automatisch der aktuelle Betriebssystemzustand der Datenspeichereinrichtung gesichert wird, wird dadurch sogar bei zum Beispiel knapper Zeit, wenn keine manuelle Deaktivierung des Betreibens der VM durch den Insassen möglich ist, gewährleistet, dass dieser auf einer anderen Recheneinrichtung auf den zuletzt gesicherten aktuellen Betriebssystemzustand der VM zugreifen kann, falls er dies möchte. Hierdurch ergibt sich ein zusätzlicher Komfortgewinn für den Insassen des Kraftfahrzeugs hinsichtlich eines nahtlosen Übergangs zwischen dem Betreiben der Betriebssysteminstallationsdaten als VM auf der Fahrzeugrecheneinrichtung sowie einer Verwendung ebendieses Betriebssystems auf einer jeweiligen weiteren Recheneinrichtung.

In einer zusätzlichen Ausgestaltungsform der Erfindung ist es vorgesehen, dass mittels einer Sensoreinrichtung des Kraftfahrzeugs einen Insassen des Kraftfahrzeugs beschreibende Sensordaten erfasst werden. Bei dieser Sensoreinrichtung des Kraftfahrzeugs handelt es sich beispielsweise um eine Innenraumkamera oder einen Sensor, der eine Präsenz eines Fahrzeugschlüssels im Kraftfahrzeug erkennt. Mittels der Auswerteeinheit werden die erfassten Sensordaten unter Anwendung eines Identifikationskriteriums zum Erzeugen eines Zulassungssignals ausgewertet. Das Identifikationskriterium umfasst beispielsweise Vorschriften, gemäß derer vorgegeben ist, welche Person, das heißt welcher potentielle Insasse des Kraftfahrzeugs, mit einem bestimmten Aussehen, das heißt bestimmten den Sensordaten der Innenraumkamera entnehmbaren physischen Merkmalen, und/oder mit einem bestimmten Fahrzeugschlüssel verknüpft ist, um die Person zu identifizieren. Außerdem können diese Vorschriften vorgeben, ob die identifizierte Person generell dazu berechtigt ist, mittels der Fahrzeugrecheneinrichtung ein von der Datenspeichereinrichtung bereitgestelltes Betriebssystem als VM im Kraftfahrzeug zu verwenden. Wird beispielsweise anhand des Fahrzeugschlüssels und/oder mithilfe einer Auswertung der von der Innenraumkamera bereitgestellten Bilddaten des Insassen festgestellt, dass der Insasse eine bestimmte Person ist, die zudem zu einer Verwendung der Fahrzeugrecheneinrichtung zum Betreiben seines mitgebrachten Betriebssystems als VM zugelassen ist, wird das entsprechende Zulassungssignal erzeugt. Letztendlich wird abhängig von dem erzeugten Zulassungssignal der Aufbau der Kommunikationsverbindung zwischen der Datenspeichereinrichtung und der Fahrzeugrecheneinrichtung von der Fahrzeugrecheneinrichtung zugelassen oder verhindert. Hierfür kann beispielsweise ein entsprechendes Benutzerkonto des Insassen im Kraftfahrzeug hinterlegt und/oder in einer Rechnerwolkeninfrastruktur für einen Zugriff aus dem Kraftfahrzeug heraus hinterlegt sein, sodass mithilfe von Daten der Innenraumkamera und/oder Fahrzeugschlüsseldaten überprüft werden kann, ob die Person, deren Benutzerkonto im Kraftfahrzeug hinterlegt ist, tatsächlich zu einem aktuellen Zeitpunkt Insasse des Kraftfahrzeugs ist, woraufhin ein Betreiben der von diesem Insassen bereitgestellten Betriebssysteminstallationsdaten als VM im Kraftfahrzeug zugelassen wird. Hierdurch wird eine zusätzliche Sicherheitsebene bereitgestellt, da basierend auf der im Kraftfahrzeug bereitgestellten Sensoreinrichtung eine eindeutige und zuverlässige Identifikation des Insassen und potentiellen Nutzers der VM erreicht wird.

Außerdem sieht eine besonders vorteilhafte Ausgestaltungsform der Erfindung vor, dass die Fahrzeugrecheneinrichtung einen Hypervisor umfasst, sodass zeitgleich mehrere VM auf dem Fahrzeugrechner betrieben werden können. Ein Hypervisor, der oftmals alternativ als virtueller Maschinenmonitor (VMM) bezeichnet wird, stellt eine abstrahierende Schicht zwischen tatsächlich vorhandener Hardware, das heißt der im Kraftfahrzeug verbauten Fahrzeugrecheneinrichtung, und weiteren zu installierenden Betriebssystemen, das heißt den mithilfe der Betriebssysteminstallationsdaten auf den jeweiligen Datenspeichereinrichtungen bereitgestellten Betriebssystemen, dar. Durch einen derartigen Hypervisor wird es möglich, dass eine virtuelle Umgebung definiert wird, die unabhängig von der tatsächlich vorhandenen Hardware der Fahrzeugrecheneinrichtung für die Installation von Gastbetriebssystemen, das heißt die Installation der jeweiligen Betriebssysteminstallationsdaten als VM, dient. Mehrere zeitgleich betriebene VM sind immer dann von Interesse, wenn der Fahrzeugrecheneinrichtung von mehreren Datenspeichereinrichtungen jeweilige Betriebssysteminstallationsdaten bereitgestellt werden. Handelt es sich bei dem Kraftfahrzeug zum Beispiel um ein Taxi, kann es vorgesehen sein, dass mehrere Passagiere dieses Taxis gleichzeitig mithilfe einer jeweiligen VM die Hardware der Fahrzeugrecheneinrichtung zum Arbeiten und/oder Computerspielespielen nutzen wollen. Mithilfe des Hypervisors der Fahrzeugrecheneinrichtung ist dies nun möglich, da mehrere VM gleichzeitig von der Fahrzeugrecheneinrichtung betrieben werden können. Hierfür ist letztendlich nur eine fest im Kraftfahrzeug verbaute Fahrzeugrecheneinrichtung nötig, die von den mehreren Insassen geteilt werden kann. Hierdurch ergeben sich zahlreiche Benutzungsmöglichkeiten für ein Kraftfahrzeug, beispielsweise für ein Taxi und/oder einen Shuttle, in dem mehrere Personen zumindest teilweise zeitgleich ihre VM verwenden können. Dies erhöht bei beispielsweise von mehreren Personen genutzten Kraftfahrzeugen den jeweiligen Komfort für die einzelnen Insassen des Kraftfahrzeugs hinsichtlich einer Möglichkeit des privaten Arbeitens und/oder Computerspielespielens während einer Fahrt mit diesem Kraftfahrzeug.

Das erfindungsgemäße Rechnersystem für ein Kraftfahrzeug umfasst eine fest im Kraftfahrzeug verbaute Fahrzeugrecheneinrichtung, eine Erfassungseinrichtung, eine Auswerteeinheit sowie eine nicht fest im Kraftfahrzeug verbaute Datenspeichereinrichtung. Die Datenspeichereinrichtung ist dazu ausgebildet, über eine Kommunikationsverbindung mit der Fahrzeugrecheneinrichtung Betriebssysteminstallationsdaten an die Fahrzeugrecheneinrichtung zu übermitteln und/oder von dieser zu empfangen. Die Auswerteeinheit ist dazu ausgebildet, ein kraftfahrzeugbezogenes Aktivierungsereignis für ein Betreiben von aus der Datenspeichereinrichtung gespeicherten Betriebssysteminstallationsdaten als VM auf der Fahrzeugrecheneinrichtung anhand von mittels der Erfassungseinrichtung erfassten Aktivierungsindikatordaten sowie ein kraftfahrzeugbezogenes Deaktivierungsereignis für das Betreiben der VM auf der Fahrzeugrecheneinrichtung anhand von mittels der Erfassungseinrichtung erfassten Deaktivierungsindikationsdaten zu ermitteln. Die Fahrzeugrecheneinrichtung ist dazu ausgebildet, sobald das kraftfahrzeugbezogenes Aktivierungsereignis ermittelt wurde, die auf der Datenspeichereinrichtung gespeicherten Betriebssysteminstallationsdaten zu empfangen und das Betreiben der VM zu starten. Außerdem ist die Fahrzeugrecheneinrichtung dazu eingerichtet, sobald das kraftfahrzeugbezogene Deaktivierungsereignis ermittelt wurde, einen aktuellen Betriebssystemzustand der VM beschreibende Betriebssysteminstallationsdaten an die Datenspeichereinrichtung und/oder eine Speichervorrichtung der Fahrzeugrecheneinrichtung zu übertragen. Die im Zusammenhang mit dem erfindungsgemäßen Verfahren vorgestellten bevorzugten Ausgestaltungen und deren Vorteile gelten entsprechend, soweit anwendbar, für das erfindungsgemäße Rechnersystem für ein Kraftfahrzeug. Aus diesem Grund sind die entsprechenden Weiterbildungen des erfindungsgemäßen Rechnersystems hier nicht noch einmal beschrieben.

In einer vorteilhaften Ausgestaltungsform des erfindungsgemäßen Rechnersystem ist es vorgesehen, dass die Datenspeichereinrichtung als mobiles elektronisches Gerät und/oder als außerhalb des Kraftfahrzeugs angeordnete Speichereinheit ausgebildet ist. Ist die Datenspeichereinrichtung als mobiles elektronisches Gerät ausgebildet, ist sie insbesondere als USB-Datenträger, Festplatte, Speicherkarte und/oder Mobiltelefon des Insassen ausgebildet. Auf einem dieser genannten mobilen elektronischen Geräte sind nun die Betriebssysteminstallationsdaten des Insassen gespeichert. Außerdem ist das entsprechende mobile elektronische Gerät dazu ausgebildet, die Kommunikationsverbindung mit der Fahrzeugrecheneinrichtung aufzubauen und aufrechtzuerhalten. Ist jedoch die Datenspeichereinrichtung als außerhalb des Kraftfahrzeugs angeordnete Speichereinheit ausgebildet, ist sie insbesondere als Speichereinheit eines Rechnernetzes, als Speichereinheit einer Servereinrichtung und/oder als Speichereinheit der Rechnerwolkeninfrastruktur ausgebildet. Die entsprechenden Betriebssystem installationsdaten liegen dann beispielsweise auf einer externen Servereinrichtung und somit letztendlich zum Beispiel auf einer Cloud-Plattform vor und können von dieser über eine drahtlose Kommunikationsverbindung zwischen der Fahrzeugrecheneinrichtung und der außerhalb des Kraftfahrzeugs angeordneten Speichereinheit als Datenspeichereinrichtung an das Kraftfahrzeug übertragen werden. Hierdurch wird deutlich, dass die Datenspeichereinrichtung nicht fest im Kraftfahrzeug verbaut ist, sondern beispielsweise nur temporär als mobiles elektronisches Gerät in diesem angeordnet werden kann. Es ist jedoch alternativ oder zusätzlich dazu möglich, dass die Datenspeichereinrichtung überhaupt nicht als gegenständliches Gerät im Kraftfahrzeug angeordnet ist, sondern lediglich als Speichereinheit, die kraftfahrzeugextern angeordnet ist und mit der eine drahtlose Kommunikationsverbindung besteht, bereitgestellt ist. Hierdurch werden zahlreiche verschiedene Möglichkeiten für den Insassen des Kraftfahrzeugs bereitgestellt, wie er die Betriebssysteminstallationsdaten während seiner Fahrt mit dem Kraftfahrzeug für die Fahrzeugrecheneinrichtung bereitstellen möchte.

Die Kommunikationsverbindung zwischen der Fahrzeugrecheneinrichtung und der Datenspeichereinrichtung kann zum Beispiel als drahtlose Verbindung, beispielsweise über ein drahtloses lokales Netzwerk (WLAN für wireless lokal area network), eine Bluetooth-Verbindung und/oder ein mobiles Datennetzwerk, beispielsweise basierend auf dem Mobilfunkstandard Long-Term-Evolution (LTE), Long-Term-Evolution-Advanced (LTE-A) oder Fifth Generation (5G), vorgesehen sein. Im Falle der Datenspeichereinrichtung als USB-Datenträger, Festplatte, Speicherkarte und/oder Mobiltelefon kann alternativ oder zusätzlich dazu eine kabelgebundene Kommunikationsverbindung vorgesehen sein, beispielsweise realisiert über die Datenträgerschnittstelle oder eine entsprechende andere Geräteschnittstelle der Fahrzeugrecheneinrichtung im Kraftfahrzeug.

Eine besonders vorteilhafte Ausgestaltungsform des erfindungsgemäßen Rechnersystems sieht vor, dass das Rechnersystem eine Anzeigeeinrichtung, eine Betätigungseinrichtung, eine Mikrofoneinrichtung und/oder eine Lautsprechereinrichtung umfasst. Diese jeweilige zusätzliche Einrichtung ist dazu ausgebildet, von der Fahrzeugrecheneinrichtung während des Betreibens der VM angesteuert zu werden. Die Inhalte der VM können also beispielsweise auf der Anzeigeeinrichtung des Kraftfahrzeugs, die bevorzugt als berührungssensitiver Bildschirm, zum Beispiel im Bereich einer Mittelkonsole des Kraftfahrzeugs angeordnet ist, erfolgen. Ebenfalls kann die Betätigungseinrichtung für diese Anzeigeeinrichtung als fest im Kraftfahrzeug verbaute Einheit vorgegeben sein. Zudem kann beispielsweise für die Verarbeitung von Sprachsignalen auf die Lautsprechereinrichtung des Kraftfahrzeugs sowie zur Ausgabe von Audiosignalen auf die Mikrofoneinrichtung des Kraftfahrzeugs zugegriffen werden. Zusätzlich zu der Verwendung der im Kraftfahrzeug verbauten Fahrzeugrecheneinrichtung kann somit auf zumindest eine weitere Komponenten des Kraftfahrzeugs zugegriffen werden, um eine komfortable und von der Funktion her umfangsreiche Infrastruktur für die betriebene VM im Kraftfahrzeug bereitzustellen. Mithilfe der bereits erwähnten Innenraumkamera des Kraftfahrzeugs kann zudem eine auf Gesten basierte Steuerung der VM unterstützt und bereitgestellt werden. Es sind somit keine zusätzlichen im Kraftfahrzeug zu verbauende Komponenten des Rechnersystems nötig, um einen vollen Funktionsumfang der betriebenen VM basierend auf der fest im Kraftfahrzeug verbauten Fahrzeugrecheneinrichtung bereitstellen zu können.

Eine zusätzliche Ausgestaltungsform des Rechnersystems sieht vor, dass die Fahrzeugrecheneinrichtung als von einer Steuereinrichtung des Kraftfahrzeugs entkoppelte Rechnereinrichtung ausgebildet ist. Die Fahrzeugrecheneinrichtung sieht also, beispielsweise aus Sicherheitsgründen hinsichtlich einer möglichen Manipulation einer Fahrzeugsteuersoftware des Kraftfahrzeugs, vor, dass die VM nur auf einer eigens dafür vorgesehenen Fahrzeugrecheneinrichtung betrieben wird und nicht auf der Fahrzeugrecheneinrichtung, die zudem alle beispielsweise zum vollautonomen Fahren des Kraftfahrzeugs benötigten Steuersoftwarekomponenten bereitstellt und ausführt. Hierdurch wird auf technisch einfache Art und Weise sichergestellt, dass es durch entsprechendes Betreiben der VM nicht zu einer Manipulation der Steuersoftware des Kraftfahrzeugs selbst kommen kann.

Alternativ dazu ist es möglich, dass die Fahrzeugrecheneinrichtung von der Rechnereinrichtung, die die Steuereinrichtung des Kraftfahrzeugs umfasst, umfasst wird. Es ist also möglich, dass im Kraftfahrzeug nur eine Fahrzeugrecheneinrichtung vorgesehen ist, die sowohl dazu ausgebildet ist, die Betriebssysteminstallationsdaten des Insassen als VM zu betreiben, als auch zur Steuerung des Kraftfahrzeugs ausgelegt und verwendet wird. Mithilfe entsprechender Absicherungsmechanismen kann jedoch sogar in diesem Fall sichergestellt werden, dass ein für den Betrieb des Kraftfahrzeugs an sich vorteilhaftes Betreiben der VM mittels der Fahrzeugrecheneinrichtung gegeben ist. Entsprechende Lösungen werden beispielsweise in den beiden oben zitierten Druckschriften, der DE 10 2012 205 301 A1 und der DE 10 2013 226 700 A1 gezeigt.

Das Kraftfahrzeug ist bevorzugt als Kraftwagen, insbesondere als Personenkraftwagen oder Lastkraftwagen, oder als Personenbus oder Motorrad ausgestaltet.

Zu der Erfindung gehört auch die Fahrzeugrecheneinrichtung und/oder die Auswerteeinheit für das Rechnersystem. Die Fahrzeugrecheneinrichtung und/oder die Auswerteeinheit weist jeweils eine Prozessoreinrichtung auf, die dazu eingerichtet ist, entsprechende Schritte einer Ausführungsform des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Die Erfindung umfasst auch die Kombinationen der Merkmale der beschriebenen Ausgestaltungsformen.

Im Folgenden sind Ausführungsbeispiele der Erfindung beschrieben. Hierzu zeigt:
- Fig. 1: eine schematische Darstellung eines Rechnersystems für ein Kraftfahrzeug; und
- Fig. 2: in schematischer Darstellung einen Signalflussgraphen für ein Verfahren zum Betreiben eines Rechnersystems für ein Kraftfahrzeug.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

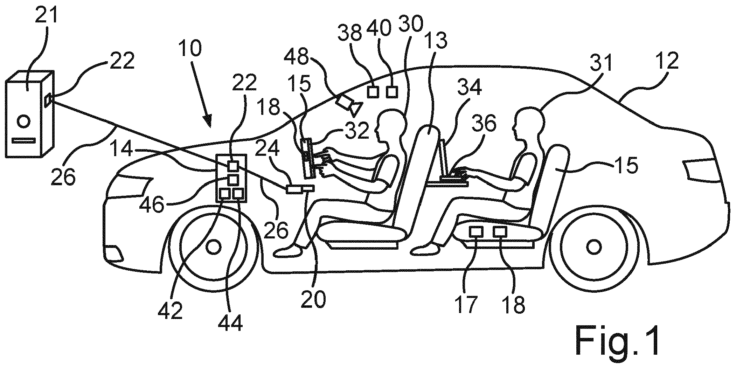

In Fig. 1 ist ein Rechnersystem 10 für ein Kraftfahrzeug 12 skizziert. Das Rechnersystem 10 umfasst eine fest im Kraftfahrzeug 12 verbaute Fahrzeugrecheneinrichtung 14, bei der es sich beispielsweise um einen On-Board-Computer des Kraftfahrzeugs 12 handelt. Zudem umfasst das Rechnersystem 10 zwei Erfassungseinrichtungen 16, 17, denen jeweils eine Auswerteeinheit 18 zugeordnet ist. Außerdem umfasst das Rechnersystem 10 zwei jeweils nicht fest im Kraftfahrzeug 12 verbaute Datenspeichereinrichtungen 20, 21. Zwischen einer Kommunikationsschnittstelle 22 der Fahrzeugrecheneinrichtung 14 und der jeweiligen Datenspeichereinrichtung 20, 21 ist jeweils eine Kommunikationsverbindung 26 aufgebaut. Hier ist die Datenspeichereinrichtung 20 als Universal Serial Bus (USB)-Datenträger ausgebildet, der mittels einer Datenspeichereinrichtungsschnittstelle 24 über die Kommunikationsverbindung 26 mit der Kommunikationsschnittstelle 22 der Fahrzeugrecheneinrichtung 14 gekoppelt ist. Demgegenüber ist die Datenspeichereinrichtung 21 als Speichereinheit einer Rechnerwolkeninfrastruktur, das heißt als Cloud-Plattform, ausgebildet, die wiederum über eine eigene Kommunikationsschnittstelle 22 verfügt, mittels derer die Kommunikationsverbindung 26 zwischen der Datenspeichereinrichtung 21 und der Fahrzeugrecheneinrichtung 14 aufgebaut ist. Die Datenspeichereinrichtung 20, 21 ist dazu ausgebildet, über die Kommunikationsverbindung 26 Betriebssysteminstallationsdaten an die Fahrzeugrecheneinrichtung 14 zu übermitteln und/oder von dieser zu empfangen.

In dem Kraftfahrzeug 12 befinden sich zwei Insassen 30, 31. Der Insasse 30 sitzt hierbei auf einem Vordersitz 13 des Kraftfahrzeugs 12 und der Insasse 31 auf einem Hintersitz 15 des Kraftfahrzeugs 12. In einer Sicht und Reichweite für den Insassen 30 befindet sich die Erfassungseinrichtung 16, die als berührungssensitiver Bildschirm 32 ausgebildet ist. Auf diesem berührungssensitiven Bildschirm 32 kann der Insasse 30 beispielsweise ein Aktivierungselement zum Starten eines Betreibens einer virtuellen Maschine (VM) basierend auf den auf der Datenspeichereinrichtung 20 gespeicherten Betriebssysteminstallationsdaten betätigen. Ebenso kann der Insasse 30 durch entsprechende Betätigung eines Deaktivierungselements auf dem berührungssensitiven Bildschirm 32 ein Signal dazu geben, das Betreiben der VM mittels der Fahrzeugrecheneinrichtung 14 zu beenden. Ist eines dieser Szenarien der Fall, wird mittels der Erfassungseinrichtung 16 die entsprechende Betätigung auf dem berührungssensitiven Bildschirm 32 erfasst und die entsprechende Betätigung als Aktivierungsindikatordaten beziehungsweise als Deaktivierungsindikatordaten mittels der Auswerteeinheit 18 ausgewertet.

Der Insasse 31 befindet sich in Sitz- und Reichweite einer Anzeigeeinrichtung 34 des Kraftfahrzeugs 12, bei der es sich lediglich um einen Bildschirm handelt. Außerdem befindet sich vor dem Insassen 31 eine Betätigungseinrichtung 36, die in Form einer Tastatur ausgestaltet ist. Der Insasse 31 kann mittels der Anzeigeeinrichtung 34 und der Betätigungseinrichtung 36 bei Betrieb eines entsprechenden Betriebssystems auf der Fahrzeugrecheneinrichtung 14 während einer Fahr mit dem Kraftfahrzeug 12 arbeiten und/oder ein Computerspiel spielen. Die Betätigungseinrichtung 36 kann alternativ oder zusätzlich zu der hier skizzierten Tastatur als Taste, Drehdrückschalter und/oder Knopf ausgebildet sein. Der Insasse 31, der auf dem Hintersitz 15 im Kraftfahrzeug 12 sitzt, befindet sich zudem auf einem Sitz, in den als Erfassungseinrichtung 17 eine Wiegeeinrichtung integriert ist. Mithilfe dieser Wiegeeinrichtung als Erfassungseinrichtung 17 kann eine Belegung des Hintersitzes 15 des Kraftfahrzeugs 12 festgestellt werden.

Der berührungssensitive Bildschirm 32, die Anzeigeeinrichtung 34 und die Betätigungseinrichtung 36 sind jeweils von dem Rechnersystem 10 umfasst. Das Rechnersystem 10 umfasst zudem eine Mikrofoneinrichtung 38 sowie eine Lautsprechereinrichtung 40 des Kraftfahrzeugs 12. Alle die genannten Komponenten, das heißt der berührungssensitive Bildschirm 32, die Anzeigeeinrichtung 34, die Betätigungseinrichtung 36, die Mikrofoneinrichtung 38 und die Lautsprechereinrichtung 40, sind jeweils dazu ausgebildet, von der Fahrzeugrecheneinrichtung 14 angesteuert zu werden.

Die Fahrzeugrecheneinrichtung 14, die fest im Kraftfahrzeug 12 verbaut ist, weist eine Virtualisierungssoftware 42 auf, mittels derer die über die Kommunikationsverbindung 26 von der Datenspeichereinrichtung 20, 21 bereitgestellten Betriebssysteminstallationsdaten als VM betrieben werden können. Außerdem weist die Fahrzeugrecheneinrichtung 14 eine Datenabgleichsoftware 44 auf, mittels derer einen aktuellen Betriebssystemzustand der VM beschreibende Betriebssysteminstallationsdaten zum Übertragen an die Datenspeichereinrichtung 20, 21 erzeugt werden können. Zudem umfasst die Fahrzeugrecheneinrichtung 14 einen Hypervisor 46, sodass zeitgleich mehrere VM auf dem Fahrzeugrecheneinrichtung 14 betrieben werden können, falls der Fahrzeugrecheneinrichtung 14 von mehreren Datenspeichereinrichtungen 20, 21 jeweilige Betriebssysteminstallationsdaten bereitgestellt werden. Die Insassen 30, 31 können somit zeitgleich jeweilige VM auf der Fahrzeugrecheneinrichtung 14 betreiben lassen.

Das Kraftfahrzeug 12 weist zudem eine Sensoreinrichtung 48 auf, die als Innenraumkamera des Kraftfahrzeugs 12 ausgebildet ist. Mittels der Sensoreinrichtung 48 kann der Insasse 30, 31 des Kraftfahrzeugs 12 erfasst werden, indem ihm beschreibende Sensordaten von der Sensoreinrichtung 48 gemessen werden. Mittels zum Beispiel der Auswerteeinheit 18 können die gemessenen Sensordaten unter Anwendung eines Identifikationskriteriums zum Erzeugen eines Zulassungssignals ausgeweitet werden. Abhängig von dem erzeugten Zulassungssignal wird der Aufbau der Kommunikationsverbindung 26 zwischen der Datenspeichereinrichtung 20, 21 und der Fahrzeugrecheneinrichtung 14 zugelassen oder gegebenenfalls verhindert.

Alternativ zu dem beschriebenen USB-Datenträger als Datenspeichereinrichtung 20 kann alternativ ein anderes mobiles elektronisches Gerät als Datenspeichereinrichtung 20 dienen, zum Beispiel eine Speicherkarte und/oder ein Mobiltelefon. Alternativ zu der beschriebenen Datenspeichereinrichtung 21 in Form einer Speichereinheit einer Rechnerwolkeninfrastruktur kann die Datenspeichereinrichtung 21 als alternative außerhalb des Kraftfahrzeugs 12 angeordnete Speichereinheit ausgebildet sein, wie zum Beispiel als Speichereinheit eines Rechnernetzes und/oder als Speichereinheit einer Servereinrichtung.

Die Fahrzeugrecheneinrichtung 14 kann von einer Steuereinrichtung des Kraftfahrzeugs 12 entkoppelt ausgebildet sein. Sie kann jedoch alternativ dazu Bestandteil einer zentralen Fahrzeugrecheneinrichtung 14 des Kraftfahrzeugs 12 sein.

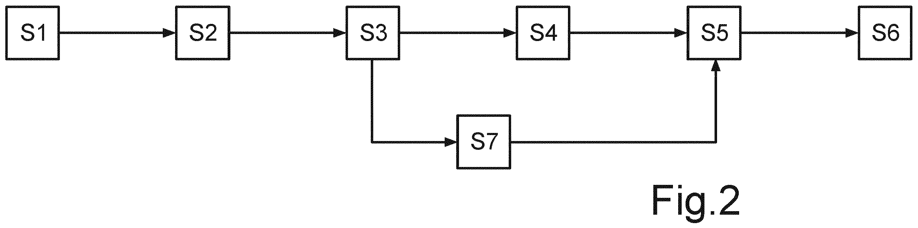

Fig. 2 zeigt die einzelnen Verfahrensschritte eines Verfahrens zum Betreiben des Rechnersystems 10 für das Kraftfahrzeug 12. In einem ersten Schritt S1 erfolgt hierbei ein Ermitteln eines kraftfahrzeugbezogenen Aktivierungsereignisses für ein Betreiben von auf der Datenspeichereinrichtung 20, 21 gespeicherten Betriebssysteminstallationsdaten als VM auf der Fahrzeugrecheneinrichtung 14. Dies erfolgt anhand von mittels der Erfassungseinrichtung 16, 17 erfassten Aktivierungsindikatordaten mittels der Auswerteeinheit 18. Die Erfassungseinrichtung 16, 17 erfasst hierbei als Aktivierungsindikatordaten Daten, die eine der folgenden Situationen beschreiben können: eine Betätigung eines Aktivierungselements auf dem berührungssensitiven Bildschirm 32 oder auf der Anzeigeeinrichtung 34 in Kombination mit der Betätigungseinrichtung 36 zum Starten des Betreibens der VM (wie für den Insassen 30 skizziert), eine Belegung des entsprechenden Fahrzeugsitzes im Kraftfahrzeug 12, zum Beispiel festgestellt mithilfe eines entsprechenden Wiegesensors als Erfassungseinrichtung 17 (wie für den Insassen 31 skizziert), eine Entriegelung einer Türschlosseinrichtung des Kraftfahrzeugs 12 und/oder ein Öffnen einer Fahrzeugtür des Kraftfahrzeugs 12 bei nicht Betreiben der VM.

Sobald das kraftfahrzeugbezogene Aktivierungsereignis anhand der entsprechenden Aktivierungsindikatordaten ermittelt wurde, erfolgt in einem Schritt S2 ein Empfangen der auf der Datenspeichereinrichtung 20, 21 gespeicherten Betriebssysteminstallationsdaten. In diesem Schritt werden also die entsprechenden Betriebssysteminstallationsdaten von dem USB-Datenträger als Datenspeichereinrichtung 20 und/oder von der Speichereinrichtung der Rechnerwolkeninfrastruktur als Datenspeichereinrichtung 21 für die Kommunikationsverbindung 26 an die Fahrzeugrecheneinrichtung 14 übermittelt. In einem nächsten Schritt S3 erfolgt daraufhin ein Starten des Betreibens der VM mittels der Fahrzeugrecheneinrichtung 14. Hierfür wird auf die Virtualisierungssoftware 42 der Fahrzeugrecheneinrichtung 14 zurückgegriffen.

In einem nächsten Schritt S4 erfolgt ein Ermitteln eines kraftfahrzeugbezogenen Deaktivierungsereignisses für das Betreiben der VM auf der Fahrzeugrecheneinrichtung 14. Dies erfolgt anhand von mittels der Erfassungseinrichtung 16, 17 erfassten Deaktivierungsindikationsdaten mittels der Auswerteeinheit 18. Die Erfassungseinrichtung 16, 17 erfasst als Deaktivierungsindikationsdaten Daten, die zumindest eine der folgenden Situationen beschreiben: eine Betätigung eines Deaktivierungselements zum Beenden des Betreibens der VM (wie es beispielsweise beim Insassen 30 auf dem berührungssensitiven Bildschirm 32 und/oder für den Insassen 31 durch eine entsprechende Betätigung der Betätigungseinrichtung 36 erfolgen kann), eine Nichtbetätigung eines Bedienelements zum Bedienen der betriebenen VM für eine vorgegebene Mindestzeitdauer, eine Nichtbelegung des Fahrzeugsitzes im Kraftfahrzeug 12, eine Verriegelung einer Türschlosseinrichtung des Kraftfahrzeugs 12 und/oder eine Öffnen einer Fahrzeugtür des Kraftfahrzeugs 12 bei betriebener virtueller Maschine. Verlässt zum Beispiel der Insasse 31 das Kraftfahrzeug 12, wird dies von der Erfassungseinrichtung 17 im Hintersitz 15 registriert, woraufhin dies als kraftfahrzeugbezogenes Deaktivierungsereignis gewertet werden kann.

In einem Schritt S5 werden nun, sobald das Deaktivierungsereignis ermittelt wurde, einen aktuellen Betriebszustand der VM beschreibende Betriebssysteminstallationsdaten an die Datenspeichereinrichtung 20, 21 übertragen. Dies erfolgt mittels der Fahrzeugrecheneinrichtung 14. Der Schritt S5 kann hierbei mithilfe der Datenabgleichsoftware 44 durchgeführt werden. Es findet somit eine Art Backup des aktuellen Zustands der VM statt. In einem nächsten Schritt S6 wird nach dem Ermitteln des Deaktivierungsereignisses und dem Übertragen der den aktuellen Betriebssystemzustand der VM beschreibenden Betriebssysteminstallationsdaten das Betreiben der VM beendet, indem diese heruntergefahren wird.

Alternativ oder zusätzlich zur Übertragung der den aktuellen Betriebszustand der VM beschreibenden Betriebssysteminstallationsdaten an die Datenspeichereinrichtung 20, 21 können diese an eine Speichervorrichtung der Fahrzeugrecheneinrichtung 14 übermittelt werden. Von dort können die Betriebssysteminstallationsdaten bei einem erneuten Aktivierungsereignis wieder geladen werden, falls der Insasse 30,31 in der Zwischenzeit nicht weiterarbeitet und folglich kein aktuellerer Zustand als der gespeicherte Zustand vorhanden sind. Hierfür kann ein entsprechender Überprüfungsschritt nach dem Ermitteln des Aktivierungsereignisses in Schritt S1 erfolgen, wobei bei gespeicherten Betriebssystem installationsdaten in der Speichervorrichtung diese geladen werden, und zwar anstelle oder zusätzlich zu einem Laden der Betriebssysteminstallationsdaten von der Datenspeichereinrichtung 20, 21.

Während des Betreibens der VM, das heißt beispielsweise nach Schritt S3, kann es zudem vorgesehen sein, dass zumindest zu einem vorgegebenen Datenabgleichzeitpunkt die den aktuellen Betriebszustand der VM beschreibende Betriebssysteminstallationsdaten an die Datenspeichereinrichtung 20, 21 übermittelt werden. Dies ist in einem Schritt S7 dargestellt. Dieser Datenabgleichzeitpunkt wird beispielsweise in Intervallen nach dem Starten der VM erreicht, typischerweise alle zehn Minuten, sodass nach dem Starten des Betreibens der VM in Schritt S3 alle zehn Minuten eine derartige Datenübertragung von der Fahrzeugrecheneinrichtung 14 zur Datenspeichereinrichtung 20, 21 stattfindet. Alternativ zu dem genannten Datenabgleichzeitpunkt kann dieser alle zwei Minuten, drei Minuten, fünf Minuten, 15 Minuten, 20 Minuten, 30 Minuten, 45 Minuten, 60 Minuten, 90 Minuten oder 120 Minuten erreicht sein.

Insgesamt zeigen die Beispiele die Nutzung einer VM in einem Kraftfahrzeug 12. Der Insasse 30, 31 nutzt hierbei fest im Kraftfahrzeug 12 verbaute Hardware in Form der Fahrzeugrecheneinrichtung 14, das heißt eine Recheneinheit, einen Arbeitsspeicher sowie Eingabemöglichkeiten, wie den berührungssensitiven Bildschirm 32, die Anzeigeeinrichtung 34 und/oder die Betätigungseinrichtung 36, der Fahrzeugrecheneinrichtung, zum Arbeiten und/oder Computerspielespielen. Dabei verwendet er jedoch kein fest im Kraftfahrzeug 12 installiertes Betriebssystem, sondern stellt eine eigene Betriebssysteminstallation bereit, die er entweder auf einem externen Datenträger, das heißt einem mobilen elektronischen Gerät als Datenspeichereinrichtung 20, wie einer Festplatte, einem USB-Stick, einer Speicherkarte und/oder einem Mobiltelefon mitführt, oder die er von einer ihm zugänglichen Cloud-Plattform herunterladen kann, das heißt von einer Speichereinheit einer Rechnerwolkeninfrastruktur als Datenspeichereinrichtung 21. Hierbei werden die entsprechenden Betriebssysteminstallationsdaten verschlüsselt abgelegt und übertragen, sodass sie nur für den Insassen nutzbar sind. In diesem Zusammenhang kann die Integration weiterer Fahrzeugsysteme zur Identifikation des Insassen 30, 31 vorteilhaft sein, wie sie zum Beispiel über eine Bilderkennung mithilfe der Innenraumkamera als Sensoreinrichtung 48 des Kraftfahrzeugs 12 möglich ist. Alternativ dazu kann diese Insassenidentifikation mithilfe einer Identifizierung mittels eines mitgeführten Fahrzeugschlüssels erfolgen. Dabei kann eine Kopplung an ein gegebenenfalls bereits vorhandenes Benutzerkonto des Insassen 30, 31 stattfinden.

Technisch wird hierbei Visualisierungstechnologie in Form der Virtualisierungssoftware 42 gemäß dem Stand der Technik verwendet. Die Betriebssysteminstallation des Insassen 30, 31 liegt also als VM im Kraftfahrzeug 12 vor, die dann über entsprechende Schnittstellen auf der Fahrzeugrecheneinrichtung 14 des Kraftfahrzeugs 12 ausgeführt wird. Die entsprechende Schnittstelle ist hier als Kommunikationsverbindung 26 zwischen der Kommunikationsschnittstelle 22 der Fahrzeugrecheneinrichtung 14 und entweder der Datenspeichereinrichtungsschnittstelle 24 oder der Kommunikationsschnittstelle 22 der Speichereinheit der Rechnerwolkeninfrastruktur ausgebildet.

Beim Verlassen des Kraftfahrzeugs 12 wird der Zustand der VM auf der Datenspeichereinrichtung 20, 21 gespeichert, das heißt entweder auf dem USB-Stick oder in der Cloud synchronisiert. Der Insasse 30, 31 kann daraufhin beispielsweise im Büro oder zu Hause mit der gleichen VM weiterarbeiten oder weiterspielen, die er zuvor im Kraftfahrzeug 12 betrieben hat. Der Insasse 30, 31 steckt somit lediglich beispielsweise seinen USB-Datenträger als Datenspeichereinrichtung 20 in das Kraftfahrzeug 12 ein oder führt eine Cloudsynchronisation durch, die vorteilhafterweise im Hintergrund laufend, um eine Wartezeit zu vermeiden, stattfindet, und kann sofort beispielsweise zu Hause weiterarbeiten. Durch ein Verfahren, wie das sogenannte Snapshot-Verfahren des Arbeitsspeichers, das mithilfe der Datenabgleichsoftware 44 durchgeführt wird, wird ermöglicht, dass das Betriebssystem der VM nicht herunter- und heraufgefahren werden muss, sondern ein Arbeitsplatzwechsel im laufenden Betrieb stattfinden kann.

Die neue Erfindungsidee hierbei ist eine Ermöglichung des beschriebenen Ablaufs durch die Ausstattung des Kraftfahrzeugs 12 mit einer Komponente zur Synchronisierung von VM-Dateien, das heißt der Betriebssysteminstallationsdaten, beziehungsweise von Snapshot-Dateien. Diese Dateien können dann von der entsprechend für einen Betrieb im Kraftfahrzeug 12 ausgelegten und in dem Kraftfahrzeug 12 fest verbauten Fahrzeugrecheneinrichtung 14 ausgeführt werden. Die Komponente zur Synchronisierung erfolgt hierbei über die Verbindung zum USB-Datenträger als Datenspeichereinrichtung 20 und/oder über eine Funkverbindung und somit drahtlose Verbindung zur Speichereinrichtung der Rechnerwolkeninfrastruktur als Datenspeichereinrichtung 21.

Falls mehrere Insassen 30, 31 eine jeweilige VM auf ihrer jeweiligen Datenspeichereinrichtung 20, 21 auswählen, kann zunächst auf der Anzeigeeinrichtung 34 über den berührungssensitiven Bildschirm 32 ausgewählt werden, welche Betriebssysteminstallationsdaten jeweils ausgeführt werden sollen. Es ist zudem möglich, dass mehrere VM gleichzeitig ausgeführt werden, die gegebenenfalls mehreren Insassen 30, 31 zuzuordnen sind. Ein Anwendungsfall ist hierbei ein Shuttle, in dem mehrere Insassen 30, 31 ihre jeweilige VM verwenden. In diesem Fall ist dennoch nur eine Fahrzeugrecheneinrichtung 14 erforderlich, die jedoch einen entsprechend höheren Arbeitsspeicher aufweist und über den Hypervisor 46 verfügt.

Es werden ebenfalls geeignete Eingabe- und Ausgabemöglichkeiten im Kraftfahrzeug 12 vorbehalten und von dem Rechnersystem 10 umfasst. Hierzu können eine kabellose Tastatur, eine kabellose Computermaus, eine entsprechende Ablagemöglichkeit, zum Beispiel für eine Tasche in einem Kraftfahrzeuginneren, ein kabelloser Touch-Bildschirm, das heißt der berührungssensitive Bildschirm 32, ein Tablet-Computer und/oder ein reiner Bildschirm als Anzeigeeinrichtung 34, die zum Beispiel an einem flexiblen Schwenkarm angeordnet ist, im Kraftfahrzeug 12 vorgesehen sein. Ebenso kann eine Ausgabe von Tönen über die im Kraftfahrzeug 12 verbaute Lautsprechereinrichtung 40 vorgesehen sein.

## Patentansprüche

1. Verfahren zum Betreiben eines Rechnersystems (10) für ein Kraftfahrzeug (12), wobei das Rechnersystem (10) eine fest im Kraftfahrzeug (12) verbaute Fahrzeugrecheneinrichtung (14), eine Erfassungseinrichtung (16, 17), eine Auswerteeinheit (18) sowie eine nicht fest im Kraftfahrzeug (12) verbaute Datenspeichereinrichtung (20, 21) umfasst, wobei die Datenspeichereinrichtung (20, 21) dazu ausgebildet ist, über eine Kommunikationsverbindung (26) mit der Fahrzeugrecheneinrichtung (14) als virtuelle Maschine, VM, betreibbare Betriebssysteminstallationsdaten an die Fahrzeugrecheneinrichtung (14) zu übermitteln und/oder von dieser zu empfangen, umfassend folgende Schritte:
- Ermitteln eines kraftfahrzeugbezogenen Aktivierungsereignisses für ein Betreiben von auf der Datenspeichereinrichtung (20, 21) gespeicherten Betriebssysteminstallationsdaten als virtuelle Maschine auf der Fahrzeugrecheneinrichtung (14) anhand von mittels der Erfassungseinrichtung (16, 17) erfassten Aktivierungsindikatordaten mittels der Auswerteeinheit (18) (S1);
- sobald das kraftfahrzeugbezogene Aktivierungsereignis ermittelt wurde, Empfangen der auf der Datenspeichereinrichtung (20, 21) gespeicherten Betriebssysteminstallationsdaten (S2) und Starten des Betreibens der virtuellen Maschine mittels der Fahrzeugrecheneinrichtung (14) (S3);
- Ermitteln eines kraftfahrzeugbezogenen Deaktivierungsereignisses für das Betreiben der virtuellen Maschine auf der Fahrzeugrecheneinrichtung (14) anhand von mittels der Erfassungseinrichtung (16, 17) erfassten Deaktivierungsindikatordaten mittels der Auswerteinheit (18) (S4); und,
- sobald das kraftfahrzeugbezogene Deaktivierungsereignis ermittelt wurde, Übertragen von einen aktuellen Betriebssystemzustand der virtuellen Maschine beschreibenden Betriebssysteminstallationsdaten an die Datenspeichereinrichtung (20, 21) und eine Speichervorrichtung der Fahrzeugrecheneinrichtung (14) mittels der Fahrzeugrecheneinrichtung (14) (S5), wobei die in der Speichervorrichtung der Fahrzeugrecheneinrichtung (14) gespeicherten Daten automatisch gelöscht werden, wenn für eine vorgegebene Zeitdauer nicht auf die Daten zugegriffen wurde und/oder wenn Speicherplatz in der Speichervorrichtung einen vorgegebenen Minimalspeicherplatzwert unterschreitet, und wobei bei einem nächsten Aktivierungsereignis zunächst geprüft wird, ob überhaupt neue Betriebssysteminstallationsdaten von der Datenspeichereinrichtung (20, 21) übertragen werden müssen, oder ob alle oder zumindest ein Teil der benötigten Betriebssysteminstallationsdaten aus der Speichervorrichtung ladbar sind.

2. Verfahren nach dem vorhergehenden Anspruch, wobei nach dem Ermitteln des Deaktivierungsereignisses und dem Übertragen der den aktuellen Betriebssystemzustand der virtuellen Maschine beschreibenden Betriebssysteminstallationsdaten das Betreiben der virtuellen Maschine beendet wird (S6).

3. Verfahren nach einem der vorhergehenden Ansprüche, wobei auf der Fahrzeugrecheneinrichtung (14) eine Virtualisierungssoftware (42) bereitgestellt ist, mittels derer die empfangenen Betriebssysteminstallationsdaten als virtuelle Maschine betrieben werden.

4. Verfahren nach einem der vorhergehenden Ansprüche, wobei auf der Fahrzeugrecheneinrichtung (14) eine Datenabgleichsoftware (44) bereitgestellt ist, mittels derer die den aktuellen Betriebssystemzustand der virtuellen Maschine beschreibenden Betriebssysteminstallationsdaten zum Übertragen an die Datenspeichereinrichtung (20, 21) und/oder die Speichervorrichtung erzeugt werden.

5. Verfahren nach einem der vorhergehenden Ansprüche, wobei während des Betreibens der virtuellen Maschine zu zumindest einem vorgegebenen Datenabgleichzeitpunkt die den aktuellen Betriebszustand der virtuellen Maschine beschreibenden Betriebssysteminstallationsdaten übermittelt werden (S7).

6. Verfahren nach einem der vorhergehenden Ansprüche, wobei die Erfassungseinrichtung (16, 17) als Aktivierungsindikatordaten Daten erfasst, die zumindest eine von folgenden Situationen beschreiben:
- eine Betätigung eines Aktivierungselements zum Starten des Betreibens der virtuellen Maschine;
- ein Koppeln der Datenspeichereinrichtung (20, 21) mit den gespeicherten Betriebssysteminstallationsdaten mit einer Datenspeichereinrichtungsschnittstelle (24) des Kraftfahrzeugs (12);
- ein erfolgreicher Anmeldevorgang bei einem vorgegebenen Benutzerkonto;
- eine Entriegelung einer Türschlosseinrichtung des Kraftfahrzeugs (12);
- ein Öffnen einer Fahrzeugtür des Kraftfahrzeugs (12) bei Nichtbetreiben der virtuellen Maschine;
- eine Belegung eines Fahrzeugsitzes im Kraftfahrzeug (12) bei Nichtbetreiben der virtuellen Maschine.

7. Verfahren nach einem der vorhergehenden Ansprüche, wobei die Erfassungseinrichtung (16, 17) als Deaktivierungsindikatordaten Daten erfasst, die zumindest eine von folgenden Situationen beschreiben:
- eine Betätigung eines Deaktivierungselements zum Beenden des Betreibens der virtuellen Maschine;
- ein erfolgreicher Abmeldevorgang bei einem vorgegebenen Benutzerkonto;
- eine Nichtbetätigung eines Bedienelements zum Bedienen der betriebenen virtuellen Maschine für eine vorgegebene Mindestzeitdauer;
- eine Verriegelung einer Türschlosseinrichtung des Kraftfahrzeugs (12);
- ein Öffnen einer Fahrzeugtür des Kraftfahrzeugs (12) bei betriebener virtueller Maschine;
- eine Nichtbelegung eines Fahrzeugsitzes im Kraftfahrzeug (12).

8. Verfahren nach einem der vorhergehenden Ansprüche, wobei mittels einer Sensoreinrichtung (48) des Kraftfahrzeugs (12) einen Insassen (30, 31) des Kraftfahrzeugs (12) beschreibende Sensordaten erfasst und mittels der Auswerteeinheit (18) die erfassten Sensordaten unter Anwendung eines Identifikationskriteriums zum Erzeugen eines Zulassungssignals ausgewertet werden, wobei abhängig von dem erzeugten Zulassungssignal der Aufbau der Kommunikationsverbindung (26) zwischen der Datenspeichereinrichtung (20, 21) und der Fahrzeugrecheneinrichtung (14) von der Fahrzeugrecheneinrichtung (14) zugelassen oder verhindert wird.

9. Verfahren nach einem der vorhergehenden Ansprüche, wobei die Fahrzeugrecheneinrichtung (14) einen Hypervisor (46) umfasst, sodass zeitgleich mehrere virtuelle Maschinen auf der Fahrzeugrecheneinrichtung (14) betrieben werden, falls der Fahrzeugrecheneinrichtung (14) von mehreren Datenspeichereinrichtungen (20, 21) jeweilige Betriebssysteminstallationsdaten bereitgestellt werden.

10. Rechnersystem (10) für ein Kraftfahrzeug (12), wobei das Rechnersystem (10) eine fest im Kraftfahrzeug (12) verbaute Fahrzeugrecheneinrichtung (14), eine Erfassungseinrichtung (16, 17), eine Auswerteeinheit (18) sowie eine nicht fest im Kraftfahrzeug (12) verbaute Datenspeichereinrichtung (20, 21) umfasst, wobei:
- die Datenspeichereinrichtung (20, 21) dazu ausgebildet ist, über eine Kommunikationsverbindung (26) mit der Fahrzeugrecheneinrichtung (14) als virtuelle Maschine, VM, betreibbare Betriebssysteminstallationsdaten an die Fahrzeugrecheneinrichtung (14) zu übermitteln und/oder von dieser zu empfangen;
- die Auswerteeinheit (18) dazu ausgebildet ist, ein kraftfahrzeugbezogenes Aktivierungsereignis für ein Betreiben von auf der Datenspeichereinrichtung (20, 21) gespeicherten Betriebssysteminstallationsdaten als virtuelle Maschine auf der Fahrzeugrecheneinrichtung (14) anhand von mittels der Erfassungseinrichtung (16, 17) erfassten Aktivierungsindikatordaten sowie ein kraftfahrzeugbezogenes Deaktivierungsereignis für das Betreiben der virtuellen Maschine auf der Fahrzeugrecheneinrichtung (14) anhand von mittels der Erfassungseinrichtung (16, 17) erfassten Deaktivierungsindikatordaten zu ermitteln; und
- die Fahrzeugrecheneinrichtung (14) dazu eingerichtet ist, sobald das kraftfahrzeugbezogene Aktivierungsereignis ermittelt wurde, die auf der Datenspeichereinrichtung (20, 21) gespeicherten Betriebssysteminstallationsdaten zu empfangen sowie das Betreiben der virtuellen Maschine zu starten, und, sobald das kraftfahrzeugbezogene Deaktivierungsereignis ermittelt wurde, einen aktuellen Betriebssystemzustand der virtuellen Maschine beschreibende Betriebssysteminstallationsdaten an die Datenspeichereinrichtung (20, 21) und eine Speichervorrichtung der Fahrzeugrecheneinrichtung (14) zu übertragen, wobei die Fahrzeugrecheneinrichtung (14) dazu eingerichtet ist, die in der Speichervorrichtung der Fahrzeugrecheneinrichtung (14) gespeicherten Daten automatisch zu löschen, wenn für eine vorgegebene Zeitdauer nicht auf die Daten zugegriffen wurde und/oder wenn Speicherplatz in der Speichervorrichtung einen vorgegebenen Minimalspeicherplatzwert unterschreitet, und bei einem nächsten Aktivierungsereignis zunächst zu prüfen, ob überhaupt neue Betriebssysteminstallationsdaten von der Datenspeichereinrichtung (20, 21) übertragen werden müssen, oder ob alle oder zumindest ein Teil der benötigten Betriebssysteminstallationsdaten aus der Speichervorrichtung ladbar sind.

11. Rechnersystem (10) nach dem vorhergehenden Anspruch, wobei die Datenspeichereinrichtung (20, 21) als mobiles elektronisches Gerät, insbesondere als Universal Serial Bus (USB)-Datenträger, Festplatte, Speicherkarte und/oder Mobiltelefon, und/oder als außerhalb des Kraftfahrzeugs (12) angeordnete Speichereinheit, insbesondere als Speichereinheit eines Rechnernetzes, einer Servereinrichtung und/oder einer Rechnerwolkeninfrastruktur, ausgebildet ist.

12. Rechnersystem (10) nach einem der Ansprüche 10 oder 11, wobei das Rechnersystem (10) eine Anzeigeeinrichtung (34), eine Betätigungseinrichtung (36), eine Mikrofoneinrichtung (38) und/oder eine Lautsprechereinrichtung (40) umfasst, die jeweils dazu ausgebildet sind, von der Fahrzeugrecheneinrichtung (14) während des Betreibens der virtuellen Maschine angesteuert zu werden.

13. Rechnersystem (10) nach einem der Ansprüche 10 bis 12, wobei die Fahrzeugrecheneinrichtung (14) als von einer Steuereinrichtung des Kraftfahrzeugs (12) entkoppelte Rechnereinrichtung ausgebildet ist.

## Claims

1. Method for operating a computer system (10) for a motor vehicle (12), wherein the computer system (10) comprises a vehicle computer apparatus (14) fixedly installed in the motor vehicle (12), a detection apparatus (16, 17), an evaluation unit (18), and a data storage apparatus (20, 21) not fixedly installed in the motor vehicle (12), wherein the data storage apparatus (20, 21) is designed to transmit to and/or receive from the vehicle computer apparatus (14) operating system installation data operable as a virtual machine, VM, via a communication link (26) with the vehicle computer apparatus (14), comprising the following steps:
- determining, by means of the evaluation unit (18), a motor vehicle-related activation event for operation of operating system installation data stored on the data storage apparatus (20, 21) as a virtual machine on the vehicle computer apparatus (14) on the basis of activation indicator data detected by means of the detection apparatus (16, 17) (S1);
- as soon as the motor vehicle-related activation event has been determined, receiving the operating system installation data (S2) stored on the data storage apparatus (20, 21) and starting the operation of the virtual machine by means of the vehicle computer apparatus (14) (S3);
- determining, by means of the evaluation unit (18), a motor vehicle-related deactivation event for the operation of the virtual machine on the vehicle computer apparatus (14) on the basis of deactivation indicator data detected by means of the detection apparatus (16, 17) (S4); and,
- as soon as the motor vehicle-related deactivation event has been determined, transmission of operating system installation data describing a current operating system state of the virtual machine to the data storage apparatus (20, 21) and a storage device of the vehicle computer apparatus (14) by means of the vehicle computer apparatus (14) (S5), wherein the data stored in the storage device of the vehicle computer apparatus (14) are automatically deleted if the data have not been accessed for a predefined period of time and/or if storage space in the storage device falls below a predefined minimum storage space value, and wherein, upon a subsequent activation event, it is first checked whether new operating system installation data have to be transferred at all from the data storage apparatus (20, 21) or whether all or at least some of the required operating system installation data can be loaded from the storage device.

2. Method according to the preceding claim, wherein after the deactivation event has been determined and the operating system installation data describing the current operating system state of the virtual machine have been transmitted, the operation of the virtual machine is terminated (S6).

3. Method according to any of the preceding claims, wherein on the vehicle computer apparatus (14) a virtualisation software (42) is provided by means of which the received operating system installation data are operated as a virtual machine.

4. Method according to any of the preceding claims, wherein on the vehicle computer apparatus (14) a data synchronisation software (44) is provided by means of which the operating system installation data describing the current operating system state of the virtual machine are generated so as to be transferred to the data storage device (20, 21) and/or the storage device.

5. Method according to any of the preceding claims, wherein the operating system installation data describing the current operating state of the virtual machine are transmitted during operation of the virtual machine at at least one predefined data synchronisation time (S7).

6. Method according to any of the preceding claims, wherein the detection apparatus (16, 17) detects, as activation indicator data, data describing at least one of the following situations:
- an actuation of an activation element for starting the operation of the virtual machine;
- a coupling of the data storage apparatus (20, 21) having the stored operating system installation data to a data storage apparatus interface (24) of the motor vehicle (12);
- a successful login process to a predefined user account;
- an unlocking of a door lock apparatus of the motor vehicle (12);
- an opening of a vehicle door of the motor vehicle (12) when the virtual machine is not in operation;
- an occupancy of a vehicle seat in the motor vehicle (12) when the virtual machine is not in operation.

7. Method according to any of the preceding claims, wherein the detection apparatus (16, 17) detects, as deactivation indicator data, data describing at least one of the following situations:
- an actuation of a deactivation element for terminating the operation of the virtual machine;
- a successful logout process from a given user account;
- a non-actuation of a control for controlling the operated virtual machine for a predefined minimum period of time;
- a locking of a door lock apparatus of the motor vehicle (12);
- an opening of a vehicle door of the motor vehicle (12) when the virtual machine is in operation;
- a non-occupancy of a vehicle seat in the motor vehicle (12).

8. Method according to any of the preceding claims, wherein sensor data describing an occupant (30, 31) of the motor vehicle (12) are detected by means of a sensor apparatus (48) of the motor vehicle (12) and the detected sensor data are evaluated by means of the evaluation unit (18) using an identification criterion for generating an admission signal, wherein the setup of the communication link (26) between the data storage apparatus (20, 21) and the vehicle computer apparatus (14) is authorised or prevented by the vehicle computer apparatus (14) depending on the authorisation signal generated.

9. Method according to any of the preceding claims, wherein the vehicle computer apparatus (14) comprises a hypervisor (46), such that a plurality of virtual machines are operated simultaneously on the vehicle computer apparatus (14) if respective operating system installation data are provided to the vehicle computer apparatus (14) from a plurality of data storage apparatuses (20, 21).

10. Computer system (10) for a motor vehicle (12), wherein the computer system (10) comprises a vehicle computer apparatus (14) fixedly installed in the motor vehicle (12), a detection apparatus (16, 17), an evaluation unit (18) and a data storage apparatus (20, 21) not fixedly installed in the motor vehicle (12), wherein:
- the data storage apparatus (20, 21) is designed to transmit to and/or to receive from the vehicle computer apparatus (14) operating system installation data operable as a virtual machine, VM, via a communication link (26) with the vehicle computer apparatus (14);
- the evaluation unit (18) is designed to determine a motor vehicle-related activation event for operation of operating system installation data stored on the data storage apparatus (20, 21) as a virtual machine on the vehicle computer apparatus (14) on the basis of activation indicator data detected by means of the detection apparatus (16, 17), and to determine a motor vehicle-related deactivation event for the operation of the virtual machine on the vehicle computer apparatus (14) on the basis of deactivation indicator data detected by means of the detection apparatus (16, 17); and
- the vehicle computer apparatus (14) is designed, as soon as the motor vehicle-related activation event has been determined, to receive the operating system installation data stored on the data storage apparatus (20, 21) and to start the operation of the virtual machine, and, as soon as the motor vehicle-related deactivation event has been determined, to transmit operating system installation data describing a current operating system state of the virtual machine to the data storage apparatus (20, 21) and a storage device of the vehicle computer apparatus (14), wherein the vehicle computer apparatus (14) is designed to automatically delete the data stored in the storage device of the vehicle computer apparatus (14) if the data have not been accessed for a predefined period of time and/or if storage space in the storage device falls below a predefined minimum storage space value, and, upon a subsequent activation event, to first check whether new operating system installation data have to be transferred at all from the data storage apparatus (20, 21) or whether all or at least some of the required operating system installation data can be loaded from the storage device.

11. Computer system (10) according to the preceding claim, wherein the data storage device (20, 21) is designed as a mobile electronic device, in particular as a Universal Serial Bus (USB) data carrier, hard disk, memory card and/or mobile telephone, and/or as a storage unit arranged outside the motor vehicle (12), in particular as a storage unit of a computer network, a server apparatus and/or a cloud computing infrastructure.

12. Computer system (10) according to any of claims 10 or 11, wherein the computer system (10) comprises a display apparatus (34), an actuation apparatus (36), a microphone apparatus (38) and/or a speaker apparatus (40), each of which is designed to be controlled by the vehicle computer apparatus (14) during operation of the virtual machine.

13. Computer system (10) according to any of claims 10 to 12, wherein the vehicle computer apparatus (14) is designed as a computer apparatus decoupled from a control apparatus of the motor vehicle (12).

## Revendications

1. Procédé pour exploiter un système informatique (10) pour un véhicule automobile (12), dans lequel le système informatique (10) comprend un dispositif informatique de véhicule (14) monté stationnaire dans le véhicule automobile (12), un dispositif de détection (16, 17), une unité d'évaluation (18), ainsi qu'un dispositif de stockage de données (20, 21) monté non stationnaire dans le véhicule automobile (12), dans lequel le dispositif de stockage de données (20, 21) est conçu pour transmettre au dispositif informatique de véhicule (14) et/ou recevoir de celui-ci, via une liaison de communication (26) avec le dispositif informatique de véhicule (14), des données d'installation du système d'exploitation exploitables sous forme de machine virtuelle, VM, comprenant les étapes suivantes :
- Détermination d'un événement d'activation lié au véhicule automobile pour une exploitation des données d'installation du système d'exploitation enregistrées sur le dispositif de stockage de données (20, 21) sous forme de machine virtuelle sur le dispositif informatique de véhicule (14) à l'aide des données indicatrices d'activation détectées au moyen du dispositif de détection (16, 17) au moyen de l'unité d'évaluation (18) (S1) ;
- dès que l'événement d'activation lié au véhicule a été déterminé, réception des données d'installation du système d'exploitation (S2) enregistrées sur le dispositif de stockage de données (20, 21) et démarrage de l'exploitation de la machine virtuelle au moyen du dispositif informatique de véhicule (14) (S3) ;
- Détermination d'un événement de désactivation lié au véhicule pour l'exploitation de la machine virtuelle sur le dispositif informatique de véhicule (14) à l'aide des données indicatrices de désactivation détectées au moyen du dispositif de détection (16, 17) au moyen de l'unité d'évaluation (18) (S4) ; et,
- dès que l'événement de désactivation lié au véhicule a été déterminé, transmission des données d'installation du système d'exploitation décrivant un état de système d'exploitation effectif de la machine virtuelle au dispositif de stockage de données (20, 21) et à un dispositif de stockage du dispositif informatique de véhicule (14) au moyen du dispositif informatique de véhicule (14) (S5), dans lequel les données enregistrées dans le dispositif de stockage du dispositif informatique de véhicule (14) sont automatiquement effacées, si aucun accès aux données n'a eu lieu pendant un laps de temps défini et/ou si l'emplacement de mémoire dans le dispositif de stockage sous-dépasse une valeur d'emplacement de mémoire minimale définie, et dans lequel il est tout d'abord vérifié lors d'un événement d'activation suivant si de nouvelles données d'installation du système d'exploitation doivent être vraiment transmises par le dispositif de stockage de données (20, 21), ou si toutes ou au moins une partie des données d'installation du système d'exploitation nécessaires peuvent être chargées depuis le dispositif de stockage.

2. Procédé selon la revendication précédente, dans lequel après la détermination de l'événement de désactivation et la transmission des données d'installation du système d'exploitation décrivant l'état de système d'exploitation effectif de la machine virtuelle, l'exploitation de la machine virtuelle est achevée (S6).

3. Procédé selon l'une quelconque des revendications précédentes, dans lequel le dispositif informatique de véhicule (14) est équipé d'un logiciel de visualisation (42) au moyen duquel les données d'installation du système d'exploitation reçues sont exploitées sous forme de machine virtuelle.

4. Procédé selon l'une quelconque des revendications précédentes, dans lequel le dispositif informatique de véhicule (14) est équipé d'un logiciel de recoupement de données (44) au moyen duquel les données d'installation du système d'exploitation décrivant l'état de système d'exploitation effectif de la machine virtuelle sont produites pour la transmission au dispositif de stockage de données (20, 21) et/ou au dispositif de mémoire.

5. Procédé selon l'une quelconque des revendications précédentes, dans lequel pendant l'exploitation de la machine virtuelle à au moins un moment défini de recoupement de données, les données d'installation du système d'exploitation décrivant l'état opérationnel effectif de la machine virtuelle sont transmises (S7).

6. Procédé selon l'une quelconque des revendications précédentes, dans lequel le dispositif de détection (16, 17) détecte des données sous forme de données indicatrices d'activation qui décrivent au moins une des situations suivantes :
- un actionnement d'un élément d'activation pour démarrer l'exploitation de la machine virtuelle ;
- un couplage du dispositif de stockage de données (20, 21) incluant les données d'installation du système d'exploitation enregistrées avec une interface de dispositif de stockage de données (24) du véhicule automobile (12) ;
- une procédure de demande de connexion réussie pour un compte utilisateur défini ;
- un déverrouillage d'un dispositif de fermeture de porte du véhicule automobile (12) ;
- une ouverture d'une porte de véhicule du véhicule automobile (12) en cas de non-exploitation de la machine virtuelle ;
- une occupation d'un siège de véhicule dans le véhicule automobile (12) en cas de non-exploitation de la machine virtuelle.

7. Procédé selon l'une quelconque des revendications précédentes, dans lequel le dispositif de détection (16, 17) détecte des données sous forme de données indicatrices de désactivation qui décrivent au moins une des situations suivantes :
- un actionnement d'un élément de désactivation pour terminer l'exploitation de la machine virtuelle ;
- une procédure de demande de déconnexion réussie pour un compte utilisateur défini ;
- un non-actionnement d'un élément de commande pour commander la machine virtuelle exploitée pendant un délai minimal défini ;
- un verrouillage d'un dispositif de fermeture de porte du véhicule automobile (12) ;
- une ouverture d'une porte de véhicule du véhicule automobile (12) lorsque la machine virtuelle est exploitée ;
- une non-occupation d'un siège de véhicule dans le véhicule automobile (12).

8. Procédé selon l'une quelconque des revendications précédentes, dans lequel des données de capteur décrivant un passager (30, 31) du véhicule automobile (12) sont détectées au moyen d'un dispositif de capteur (48) du véhicule automobile (12) et les données de capteur détectées sont évaluées au moyen de l'unité d'évaluation (18) à l'aide d'un critère d'identification en vue de produire un signal d'autorisation, dans lequel en fonction du signal d'autorisation produit, l'établissement de la liaison de communication (26) entre le dispositif de stockage de données (20, 21) et le dispositif informatique de véhicule (14) est autorisé ou bloqué par le dispositif informatique de véhicule (14).

9. Procédé selon l'une quelconque des revendications précédentes, dans lequel le dispositif informatique de véhicule (14) comprend un hyperviseur (46), de telle sorte que plusieurs machines virtuelles fonctionnent simultanément sur le dispositif informatique de véhicule (14) au cas où des données d'installation du système d'exploitation respectives sont fournies au dispositif informatique de véhicule (14) par plusieurs dispositifs de stockage de données (20, 21).

10. Système informatique (10) pour un véhicule automobile (12), dans lequel le système informatique (10) comprend un dispositif informatique de véhicule (14) monté stationnaire dans le véhicule automobile (12), un dispositif de détection (16, 17), une unité d'évaluation (18) et un dispositif de stockage de données (20, 21) monté non stationnaire dans le véhicule automobile (12), dans lequel :
- le dispositif de stockage de données (20, 21) est conçu pour transmettre au dispositif informatique de véhicule (14) et/ou recevoir de celui-ci, via une liaison de communication (26) avec le dispositif informatique de véhicule (14), des données d'installation du système d'exploitation exploitables sous forme de machine virtuelle, VM ;
- l'unité d'évaluation (18) est conçue pour déterminer un événement d'activation lié au véhicule automobile pour une exploitation des données d'installation du système d'exploitation enregistrées sur le dispositif de stockage de données (20, 21) sous forme de machine virtuelle sur le dispositif informatique de véhicule (14) à l'aide des données indicatrices d'activation détectées au moyen du dispositif de détection (16, 17), ainsi qu'un événement de désactivation lié au véhicule pour l'exploitation de la machine virtuelle sur le dispositif informatique de véhicule (14) à l'aide des données indicatrices de désactivation détectées au moyen du dispositif de détection (16, 17) ; et
- le dispositif informatique de véhicule (14) est agencé, dès que l'événement d'activation lié au véhicule a été déterminé, pour recevoir les données d'installation du système d'exploitation enregistrées sur le dispositif de stockage de données (20, 21) et pour démarrer l'exploitation de la machine virtuelle, et, dès que l'événement de désactivation lié au véhicule a été déterminé, pour transmettre au dispositif de stockage de données (20, 21) et à un dispositif de mémoire du dispositif informatique de véhicule (14) des données d'installation du système d'exploitation décrivant un état de système d'exploitation effectif de la machine virtuelle, dans lequel le dispositif informatique de véhicule (14) est agencé pour effacer automatiquement les données enregistrées dans le dispositif de mémoire du dispositif informatique de véhicule (14), si aucun accès aux données n'a eu lieu pendant un laps de temps défini et/ou si l'emplacement de mémoire dans le dispositif de mémoire sous-dépasse une valeur d'emplacement de mémoire minimale définie, et il est tout d'abord vérifié lors d'un événement d'activation suivant si de nouvelles données d'installation du système d'exploitation doivent être vraiment transmises par le dispositif de stockage de données (20, 21), ou si toutes ou au moins une partie des données d'installation du système d'exploitation nécessaires peuvent être chargées depuis le dispositif de mémoire.

11. Système informatique (10) selon l'une quelconque des revendications précédentes, dans lequel le dispositif de stockage de données (20, 21) est conçu sous forme d'appareil électronique mobile, en particulier sous forme de support de données "Universal Serial Bus" (USB), disque dur, carte à mémoire et/ou téléphone portable, et/ou sous forme d'unité de mémoire disposée à l'extérieur du véhicule automobile (12), en particulier sous forme d'unité de mémoire d'un réseau informatique, d'un dispositif de serveur et/ou d'une infrastructure informatique dématérialisée.

12. Système informatique (10) selon l'une quelconque des revendications 10 ou 11, dans lequel le système informatique (10) comprend un dispositif d'affichage (34), un dispositif d'actionnement (36), un dispositif de microphone (38) et/ou un dispositif de haut-parleur (40) qui sont respectivement conçus pour être commandés par le dispositif informatique de véhicule (14) pendant l'exploitation de la machine virtuelle.

13. Système informatique (10) selon l'une quelconque des revendications 10 à 12, dans lequel le dispositif informatique de véhicule (14) est conçu en tant que dispositif informatique découplé d'un appareil de commande du véhicule automobile (12).
